(19) **Europäisches Patentamt European Patent Office Office européen des brevets**

(11) **EP 4 723 504 A1**

(12) **EUROPEAN PATENT APPLICATION**
published in accordance with Art. 153(4) EPC

(43) Date of publication:
08.04.2026 Bulletin 2026/15

(21) Application number: 23939583.3

(22) Date of filing: 30.05.2023

(51) International Patent Classification (IPC):
H04B 7/0456 (2017.01)    H04B 7/0417 (2017.01)

(52) Cooperative Patent Classification (CPC):
H04B 7/0417; H04B 7/0456

(86) International application number:
PCT/JP2023/020089

(87) International publication number:
WO 2024/247104 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: NTT DOCOMO, INC.
Tokyo 100-6150 (JP)

(72) Inventors:
• ECHIGO, Haruhi
Tokyo 100-6150 (JP)
• SHIBAIKE, Naoya
Tokyo 100-6150 (JP)
• MATSUMURA, Yuki
Tokyo 100-6150 (JP)
• LI, Xiang
Beijing 100190 (CN)
• WANG, Jing
Beijing 100190 (CN)
• HOU, Xiaolin
Beijing 100190 (CN)
• CHEN, Lan
Beijing 100190 (CN)

(74) Representative: Hoffmann Eitle
Patent- und Rechtsanwälte PartmbB
Arabellastraße 30
81925 München (DE)

(54) **TERMINAL, WIRELESS COMMUNICATION METHOD, AND BASE STATION**

(57)    A terminal according to one aspect of the present disclosure includes a receiving section that receives a configuration of a report of channel state information (CSI) based on a type 1 multi-panel codebook, and a control section that controls transmission of the report based on measurement of a plurality of channel state information reference signals (CSI-RSs) from a plurality of panels, based on the configuration. The report includes a plurality of indices respectively corresponding to the plurality of panels. The plurality of indices respectively correspond to a plurality of spatial domain bases.

FIG. 14A

Beamfocusing

# FIG. 14B

LoS-MIMO

| | | | |
|---|---|---|---|
| H-pol | | Layer 1 | |
| V-pol | | Layer 2 | |
| | | Layer 3 | |
| | | Layer 4 | |

Panel 0

$b >> \lambda$

Panel 1

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), reporting of channel state information (CSI) based on reference signal reception is under study. Enhancement in communication using a plurality of panel/transmission/reception points (TRPs), such as multi-input multi-output (MIMO) using a line-of-sight (LoS) channel and coherent joint transmission (CJT), is under study.

However, studies have not sufficiently been made on CSI/codebook for such enhancement. Unless such a method is defined clearly, communication throughput, communication quality, and the like may deteriorate.

In view of this, an object of the present disclosure is to provide a terminal, a radio communication method, and a base station that determine appropriate CSI/codebook.

Solution to Problem

A terminal according to one aspect of the present disclosure includes a receiving section that receives a configuration of a report of channel state information (CSI) based on a type 1 multi-panel codebook, and a control section that controls transmission of the report based on measurement of a plurality of channel state information reference signals (CSI-RSs) from a plurality of panels, based on the configuration. The report includes a plurality of indices respectively corresponding to the plurality of panels. The plurality of indices respectively correspond to a plurality of spatial domain bases.

Advantageous Effects of Invention

According to one aspect of the present disclosure, CSI can be appropriately reported.

Brief Description of Drawings

[FIG. 1] FIG. 1 shows an example of a 16-level quantization table.
[FIG. 2] FIG. 2 shows an example of an 8-level quantization table.
[FIG. 3] FIGS. 3A and 3B show examples of a type 2 PS codebook/enhanced type 2 PS codebook.

[FIG. 4] FIGS. 4A and 4B show examples of a further enhanced type 2 PS codebook.

[FIG. 5] FIG. 5 shows an example of parameter combinations for an enhanced type 2 codebook.

[FIG. 6] FIG. 6 shows an example of parameter combinations for the further enhanced type 2 PS codebook.

[FIG. 7] FIG. 7 shows an example of restriction on amplitude in a type 2 codebook.

[FIG. 8] FIG. 8 shows an example of restriction on amplitude in the enhanced type 2 codebook.

[FIG. 9] FIG. 9 shows an example of a near-field and a far-field.

[FIG. 10] FIGS. 10A and 10B show examples of beamforming.

[FIG. 11] FIGS. 11A and 11B show examples of a LoS channel.

[FIG. 12] FIGS. 12A and 12B show examples of spatial multiplexing in a type 1 multi-panel codebook.

[FIG. 13] FIGS. 13A and 13B show examples of mTRP CJT.

[FIG. 14] FIGS. 14A and 14B show examples of enhancement of the type 1 multi-panel codebook.

[FIG. 15] FIGS. 15A and 15B show examples of beams in a multi-panel.

[FIG. 16] FIG. 16 shows a first part of an example of spatial multiplexing for four layers in an existing type 1 multi-panel codebook.

[FIG. 17] FIG. 17 shows a second part of the example of spatial multiplexing for four layers in the existing type 1 multi-panel codebook.

[FIG. 18] FIG. 18 shows an example of spatial multiplexing for four layers in an enhanced type 1 multi-panel codebook.

[FIG. 19] FIG. 19 shows an example of arrangement of the multi-panel.

[FIG. 20] FIGS. 20A and 20B show examples of an antenna array structure.

[FIG. 21] FIG. 21 shows an example of alternative 1 of SD beam selection.

[FIG. 22] FIG. 22 shows an example of alternative 2a of SD beam selection.

[FIG. 23] FIG. 23 shows an example of alternative 2b of SD beam selection.

[FIG. 24] FIG. 24 shows an example of alternative 1 of spatial multiplexing for two layers and two panels.

[FIG. 25] FIG. 25 shows an example of alternative 2 of spatial multiplexing for two layers and two panels.

[FIG. 26] FIG. 26 is a diagram to show an example of a schematic structure of a radio communication system according to one embodiment.

[FIG. 27] FIG. 27 is a diagram to show an example of a structure of a base station according to one embodiment.

[FIG. 28] FIG. 28 is a diagram to show an example of a structure of a user terminal according to one embodiment.

[FIG. 29] FIG. 29 is a diagram to show an example of a hardware structure of the base station and the user terminal according to one embodiment.

[FIG. 30] FIG. 30 is a diagram to show an example of a vehicle according to one embodiment.

Description of Embodiments

(CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-Interference Measurement) (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information), and may control, based on the report configuration information, CSI reporting. The report configuration information may be, for example, an information element (IE) "CSI-ReportConfig" of radio resource control (RRC). Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.

- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI (SP-CSI) report.

The report quantity information may indicate at least one combination of the above CSI parameters (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. For example, the wideband may be the entire given carrier (component carrier (CC), cell, serving cell), or may be the entire bandwidth part (BWP) in a given carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate a PMI of which of the wideband or the subband is to be reported (frequency domain information may include, for example, an RRC IE "pmi-FormatIndicator" used for determination of one of wideband PMI reporting and subband PMI reporting). The UE may determine, based on at least one of the report quantity information and the frequency domain information, frequency granularity of the CSI report (that is, one of the wideband PMI report or the subband PMI report).

When the wideband PMI report is configured (determined), one wideband PMI may be reported for the entire CSI reporting band. On the other hand, when the subband PMI report is configured, single wideband indication $i_1$ may be reported for the entire CSI reporting band, and subband indication (one subband indication) $i_2$ for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the spatial domain (space domain), the CSI report may include CSI of one or more types. For example, the CSI may include at least one of a first type (type 1 CSI) used for selection of a single beam, and a second type (type 2 CSI) used for selection of multi-beam. The single beam may be interpreted as a single layer, and the multi-beam may be interpreted as a plurality of beams. The type 1 CSI may not assume multi-user multiple input multiple output (MU-MIMO), and the type 2 CSI may assume multi-user MIMO.

The above codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. UCI may be delivered on a PUCCH, or may be delivered on a PUSCH.

In Rel-15 NR, the UCI can include one CSI part for wideband PMI feedback. CSI report #n includes, if reported, PMI wideband information.

In Rel-15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are separately coded.

In Rel-15 NR, the UE is configured with N (N ≥ 1) report settings for CSI report configuration and M (M ≥ 1) resource settings for CSI resource configuration, by a higher layer. For example, the CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource set or CSI-IM resource set).

For enabling, for both of FR1 and FR2, more dynamic channel/interference hypotheses for NCJT, assessment and specifications of CSI reporting for DL transmission with at least one of multi-TRP and multi-panel are under study.

(Codebook Configuration)

The UE is configured with a codebook (CB)-related parameter (codebook configuration (CodebookConfig)) by higher layer signaling (RRC signaling). The codebook configuration is included in a CSI report configuration (CSI-ReportConfig) of a higher layer (RRC) parameter.

In the codebook configuration, at least one codebook out of a plurality of codebooks including a type 1 single-panel (typeI-SinglePanel), type 1 multi-panel (typeI-MultiPanel), type 2 (typeII), and type 2 port selection (typeII-PortSelection) is selected.

The codebook parameter includes a parameter related to codebook subset restriction (CBSR) ("...Restriction" in CodebookConfig). Configuration of the CBSR is a bit indicating, for a precoder associated with a CBSR bit, which PMI report is allowed ("1") and which PMI report is not allowed ("0"). 1 bit of a CBSR bitmap corresponds to one codebook index / antenna port.

(CSI Report Configuration)

CSI report configuration (CSI-ReportConfig) of Rel. 16 includes CSI-RS resources for channel measurement (resourcesForChannelMeasurement (CMRs)), CSI-RS resources for interference measurement (csi-IM-ResourcesFor-Interference (ZP-IMRs), nzp-CSI-RS-ResourcesForInterference (NZP-IMRs)), and the like, in addition to a codebook configuration (CodebookConfig). The parameters of CSI-ReportConfig excluding codebookConfig-r16 are also included in CSI report configuration of Rel. 15.

For Rel. 17, enhanced CSI report configuration (CSI-ReportConfig) for multi-TRP CSI measurement/reporting using NCJT is under study. In the CSI report configuration, two CMR groups corresponding to two respective TRPs are configured. CMRs in the CMR groups may be used for measurement of at least one of multi-TRP using NCJT and a single TRP. N CMR pairs for NCJT are configured by RRC signaling. Whether CMRs of a CMR pair are to be used for single TRP measurement may be configured for the UE by RRC signaling.

For CSI reporting associated with multi-TRP/panel NCJT measurement and configured by a single CSI report configuration, support of at least one of options 1 and 2 below is under study.

<Option 1>

The UE is configured to report X (X = 0, 1, 2) CSIs associated with single TRP measurement hypotheses and one CSI associated with NCJT measurement. When X = 2, two CSIs are associated with two different single TRP measurements using CMRs of different CMR groups.

<Option 2>

The UE may be configured to report one CSI associated with the best measurement result of measurement hypotheses for NCJT and a single TRP.

As described above, in Rel. 15/16, CBSR is configured for each codebook configuration for each CSI report configuration. In other words, the CBSR is applied to all the CMRs and the like in corresponding CSI reporting configuration.

Note, however, that there is a possibility that when options 1 and 2 above are applied to multi-TRP CSI report configuration of Rel. 17 by CSI report configuration, configuration of the following measurement is performed.

Option 1 (X = 0): measurement of only CSI for NCJT
Option 1 (X = 1): measurement of CSI for NCJT and CSI for single TRP (one TRP)
Option 1 (X = 2): measurement of CSI for NCJT and CSI for single TRP (two TRPs)
Option 2: measurement of both of CSI for NCJT and CSI for single TRP

A plurality of subbands for CSI report #n indicated and given by a higher layer parameter csi-ReportingBand may be serially numbered in ascending order including the lowest subband of csi-ReportingBand as subband 0.

(PMI/Type 1 Codebook)

As a type 1 codebook (Rel. 15), a type 1 single-panel codebook and a type 1 multi-panel codebook are defined for a base station panel. In a type 1 single-panel, an antenna model of a CSI antenna port array (logical configuration) is defined for $(N_1, N_2)$. The number $P_{CSI-RS}$ of CSI-RS antenna ports is $2N_1N_2$. In type 1 multi-panel, an antenna model of a CSI antenna port array (logical configuration) is defined for the number $P_{CSI-RS}$ of CSI-RS antenna ports and $(N_g, N_1, N_2)$.

- Type 1 Single-Panel Codebook

For Rel-15 type 1 single-panel CSI, a higher layer parameter of a codebook type (subType in type1 in codebookType in CodebookConfig) is set to a type 1 single-panel ('type1-SinglePanel') for the UE. When the number v of layers $\in \{2, 3, 4\}$ is not satisfied, PMI values correspond to three codebook indices $i_{1,1}, i_{1,2}, i_2$. When the number v of layers $\in \{2, 3, 4\}$ is satisfied, PMI values correspond to four codebook indices $i_{1,1}, i_{1,2}, i_{1,3}, i_2$. When the number v of layers $\in \{2, 3, 4\}$ is not satisfied, composite codebook index $i_1 = [i_{1,1}\ i_{1,2}]$. When the number v of layers $\in \{2, 3, 4\}$ is satisfied, composite codebook index $i_1 = [i_{1,1}\ i_{1,2}\ i_{1,3}]$. $i_1$ may be an index for a wideband. $i_2 = n$ may be an index for a subband/phase.

For $P_{CSI-RS}$, supported configurations (value combinations) of $(N_1, N_2)$ and $(O_1, O_2)$ are defined in a specification. $(N_1, N_2)$ indicates the number of two-dimensional (2D) antenna elements, and is configured by a higher layer parameter n1-n2 in moreThanTwo in nrOfAntennaPorts in type1-SinglePanel. n1-n2 is a bitmap parameter of $N_1O_1N_2O_2$ bits. $(O_1, O_2)$ is a 2D over-sampling factor.

The codebook for a 1-layer CSI report and codebook mode (codebookMode) = 1 includes index $i_{1,1} = l = 0, 1, ..., N_1O_1 - 1$ corresponding to a beam horizontal component, index $i_{1,2} = m = 0, 1, ..., N_2O_2 - 1$ corresponding to a beam vertical component, and index $i_2 = n = 0, 1, 2, 3$ corresponding to a subband. For a precoding matrix for the 1-layer CSI report codebook using antenna ports 3000 to 2999+$P_{CSI-RS}$, $W\_i_{1,1},i_{1,2},i_2{}^{(1)} = W_{l,m,n}{}^{(1)}$ is given by the following expression.

$$W_{l,m,n}^{(1)} = \frac{1}{\sqrt{P_{CSI\text{-}RS}}} \begin{bmatrix} v_{l,m} \\ \varphi_n v_{l,m} \end{bmatrix} \tag{E1}$$

Here, $v_{l,m}$ is a DFT vector (a spatial domain (SD) vector, a 2D-DFT vector, an SD DFT vector, an SD base vector, an SD beam) having $N_1$ rows and $N_2$ columns, is expressed by $\exp(j2\pi l n_1 / O_1 N_1) \times \exp(j2\pi m n_2 / O_2 N_2)$, $n_1 = 0, 1, ..., N_1 - 1$, and $n_2 = 0, 1, ..., N_2 - 1$, and is identified by v, l. $v_{l,m}$ indicates one beam. It is a phase difference (co-phasing, inter-polarization phase compensation, phase compensation between polarizations) $\varphi_n = \exp(j\pi n/2)$ between polarizations (a horizontal polarization and a vertical polarization), and indicates phase of another polarization relative to phase of one polarization.

- Type 1 Multi-Panel Codebook

For Rel-15 type 1 multi-panel CSI, as compared with that for the type 1 single-panel, the number $N_g$ of panels is configured in addition to $N_1$ and $N_2$. As an inter-panel phase difference (inter-panel co-phasing, inter-panel phase compensation, phase compensation between panels), $i_{1,4}$ is additionally reported. The same SD beam (DFT vector $v_{l,m}$, SD base indices l and m) is selected for each panel, and only the inter-panel phase difference is additionally reported.

For $P_{CSI-RS}$, supported configurations (value combinations) of $(N_g, N_1, N_2)$ and $(O_1, O_2)$ are defined in a specification. $(N_1, N_2)$ is configured by ng-n1-n2 in type1-MultiPanel. $i_{1,1} = l = \{0, 1, ..., N_1O_1 - 1\}$ is an over-sampled SD base horizontal component. $i_{1,2} = m = \{0, 1, ..., N_2O_2 - 1\}$ is an over-sampled SD base vertical component. $i_{1,4,q} = p = \{0, 1, 2, 3\}$ for $q = 1, ..., N_g - 1$ is the number of panels. $i_2 = n = \{0, 1, 2, 3\}$ is the number of beams for each panel.

For codebook mode (codebookMode) = 1, the precoding matrix for the 1-layer CSI report codebook using antenna ports 3000 to 2999+$P_{CSI-RS}$ is represented by $W\_i_{1,1}, i_{1,2}, i_{1,4}, i_2{}^{(1)}$ using indices $i_{1,1}, i_{1,2}, i_{1,4}$, and $i_2$. Here, $W_{l,m,p,n}{}^{(1)} = W_{l,m,p,n}{}^{(1, N_g, 1)}$.

For codebook mode = 1, the precoding matrix $W\_l,l',m,m',p,n{}^{(2)}$ for $N_g = \{2, 4\}$ for a 2-layer CSI report codebook using antenna ports 3000 to 2999+$P_{CSI-RS}$ is given by 1/sqrt(2) [W_l,m,p,n^(1, $N_g$, 1) W_l,m,p,n^(2, $N_g$, 1)]. Here, W_l,m,p,n^(1, $N_g$, 1) and W_l,m,p,n^(2, $N_g$, 1) (precoding matrix $W_{l,m,p,n}^{1,2,1}$ for the first layer, $N_g$ = 2, and codeBookMode = 1, precoding matrix $W_{l,m,p,n}^{2,2,1}$ for the second layer, $N_g$ = 2, and codeBookMode = 1, precoding matrix $W_{l,m,p,n}^{1,4,1}$ for the first layer, $N_g$ = 4, and codeBookMode = 1, and precoding matrix $W_{l,m,p,n}^{2,4,1}$ for the second layer, $N_g$ = 4, and codeBookMode = 1) are given by the following expression.

$$W_{l,m,p,n}^{1,2,1} = \frac{1}{\sqrt{P_{CSI-RS}}} \begin{bmatrix} v_{l,m} \\ \varphi_n v_{l,m} \\ \varphi_{p_1} v_{l,m} \\ \varphi_n \varphi_{p_1} v_{l,m} \end{bmatrix} \quad W_{l,m,p,n}^{2,2,1} = \frac{1}{\sqrt{P_{CSI-RS}}} \begin{bmatrix} v_{l,m} \\ -\varphi_n v_{l,m} \\ \varphi_{p_1} v_{l,m} \\ -\varphi_n \varphi_{p_1} v_{l,m} \end{bmatrix}$$

$$W_{l,m,p,n}^{1,4,1} = \frac{1}{\sqrt{P_{CSI-RS}}} \begin{bmatrix} v_{l,m} \\ \varphi_n v_{l,m} \\ \varphi_{p_1} v_{l,m} \\ \varphi_n \varphi_{p_1} v_{l,m} \\ \varphi_{p_2} v_{l,m} \\ \varphi_n \varphi_{p_2} v_{l,m} \\ \varphi_{p_3} v_{l,m} \\ \varphi_n \varphi_{p_3} v_{l,m} \end{bmatrix} \quad W_{l,m,p,n}^{2,4,1} = \frac{1}{\sqrt{P_{CSI-RS}}} \begin{bmatrix} v_{l,m} \\ -\varphi_n v_{l,m} \\ \varphi_{p_1} v_{l,m} \\ -\varphi_n \varphi_{p_1} v_{l,m} \\ \varphi_{p_2} v_{l,m} \\ -\varphi_n \varphi_{p_2} v_{l,m} \\ \varphi_{p_3} v_{l,m} \\ -\varphi_n \varphi_{p_3} v_{l,m} \end{bmatrix}$$

(E2)

Here, $\varphi_n = e^{j\pi n/2}$. For $N_g$=2, p = $p_1$, and for $N_g$=4, p = [$p_1$, $p_2$, $p_3$]. $\varphi$_$p_1$, $\varphi$_$p_2$, and $\varphi$_$p_3$ represent the inter-panel phase difference (inter-panel phase compensation). The same SD beam is selected for panels 0, 1, 2, and 3, $\varphi$_$p_1$ represents a phase difference of panel 1 relative to panel 0, $\varphi$_$p_2$ represents a phase difference of panel 2 relative to panel 0, and $\varphi$_$p_3$ represents a phase difference of panel 3 relative to panel 0.

For codebook mode = 2 and $N_g$ = 2, the precoding matrix for the 1-layer CSI report codebook using antenna ports 3000 to 2999+$P_{CSI-RS}$ is $W_{l,m,p,n}^{(1)}$ = W_l,m,p,n^(1, $N_g$, 2).

(PMI/Type 2 Codebook)

- Type 2 Codebook

In the present disclosure, matrix Z with X rows and Y columns is sometimes expressed as Z(X×Y).

For type 2 CSI of Rel. 15, the precoding matrix for each subband (SB-wise) is based on the following expression for given layer l.

$$W_1(N_t \times N_3) = W_1 W_{2,1} \quad (F1)$$

$N_t$ is the number of antennas/antenna ports. $N_3$ is a total number of precoding (beamforming) matrices (precoders) (number of subbands) indicated by a PMI.

$W_1(N_t \times 2L)$ indicates 2L DFT vectors (over-sampled DFT vectors). L $\in$ {2, 4} is the number of beams for each layer. The actual number of beams taking account of a horizontal polarization and a vertical polarization at one point is 2L. For example, the DFT vectors of L = 2 SD beams may be represented by $b_i$ and $b_j$, respectively.

$W_{2,l}(2L \times N_3)$ is a matrix (LC coefficient matrix) including linear combination coefficients (linear combination (LC) coefficients, subband complex LC coefficients, combination coefficients) for layer I. $W_{2,l}$ indicates beam selection and a phase difference (co-phasing) between two polarizations. For example, the LC coefficients respectively corresponding to $L = 2$ SD beams $b_i$ and $b_j$ are $c_i$ and $c_j$. For example, a channel vector h is approximated by a linear combination $c_i b_i$, + $c_j b_j$ of $L = 2$ SD beams. Feedback overhead is primarily caused by an LC coefficient matrix $W_{2,l}$. The type 2 CSI of Rel. 15 supports only ranks 1 and 2.

In the type 2 CSI, a channel (channel matrix) for a given user is represented by a linear combination of two polarizations and L SD beams. The type 2 CSI of Rel. 15 supports ranks 1 and 2.

- Enhanced Type 2 Codebook (Rel. 16)

The type 2 CSI (enhanced type 2 codebook) of Rel. 16 reduces overhead related to the LC coefficient matrix $W_{2,l}$ by frequency domain (FD) compression. The type 2 CSI of Rel. 16 supports ranks 3 and 4 in addition to ranks 1 and 2.

In the type 2 CSI of Rel. 16, the precoding matrix $W_l$ for the given layer I is expressed by the following expression.

$$\text{Wl} = W_1 \tilde{W}_1 W_{f,1}^H \quad (F2)$$

$W_{2,l}$ is approximated by $\tilde{W}_l W_{f,l}^H$. The matrix $\tilde{W}$ may be expressed by adding "~" above W. $\tilde{W}_l$ may be expressed as $\tilde{W}_{2,l}$. $W_{f,l}^H$ is an adjoint matrix of $W_{f,l}$, and is obtained by the conjugate transpose of $W_{f,l}$.

For a CSI report, the UE may be configured with one of two subband sizes. The subband (CQI subband) may be defined as $N_{PRB}^{SB}$ consecutive PRBs, and may depend on a total number of PRBs in a BWP. The number R of PMI subbands per CQI subband is configured by an RRC IE (numberOfPMI-SubbandsPerCQI-Subband). R controls a total number $N_3$ of precoding matrices indicated by a PMI, as a function of the number of subbands configured in csi-ReportingBand, a subband size configured by subbandSize, and a total number of PRBs in a BWP.

$W_1(N_t \times 2L)$ indicates 2L DFT vectors. To represent the matrix, a plurality of indices of SD bases and two-dimensional over-sampling factors are reported.

$\tilde{W}_l(2L \times M_v)$ is an LC coefficient matrix. To represent the matrix, up to $K_0$ non-zero coefficients (NZCs, non-zero amplitude LC coefficients) are reported. The report includes two parts: a bitmap indicating an NZC location, and a quantized NZC.

$W_{f,l}(N_3 \times M_v)$ indicates $M_v$ DFT vectors (frequency domain (FD) DFT vectors, FD base vectors, FD beams) for layer I. Each DFT vector uses $N_3$ FD bases (subbands). $N_3$ is a total number of precoding (beamforming) matrices (precoders) (number of subbands) indicated by a PMI as a function of the number of subbands configured in csi-ReportingBand. csi-ReportingBand indicates, when CSI for a given BWP is reported, contiguous or discontiguous subbands in the BWP. $M_v$ FD DFT vectors are present for each layer. When $N_3 > 19$, $M_v$ FD DFT vectors (FD bases) from an intermediate subset (InS) of size $N_3'(< N_3)$ are selected. When $N_3 \leq 19$, $\log_2(C(N_3 - 1, M_v - 1))$ bits are reported. Here, $C(N_3 - 1, M_v - 1)$ represents the number (combinatorial coefficient $C(x, y)$) of combinations to select $M_v - 1$ from $N_3 - 1$, and is also referred to as binomial coefficients.

Response/distribution (frequency response) of a frequency domain indicated by a linear combination of an FD DFT vector and an LC coefficient may be referred to as an FD beam. The FD beam may correspond to a delay profile (time response).

A PMI subband size is given by a CQI subband size / R, and $R \in \{1, 2\}$. The number $M_v$ of FD DFT vectors for given rank v is given by $\text{ceil}(p_v \times N_3/R)$. The number $M_v$ of FD DFT vectors is the same for all layers $l \in \{1, 2, 3, 4\}$. $p_v$ is configured by a higher layer.

A plurality of precoding matrices indicated by a PMI are determined from $L + M_v$ vectors.

L SD beams (SD DFT vectors) $v_{m\_1^{\wedge}(i), m\_2^{\wedge}(i)}$ for beam index $i = 0, 1, ..., L - 1$ are identified by $q_1, q_2, n_1$, and $n_2$, and are indicated by $i_{1,1}$ and $i_{1,2}$.

$M_v$ FD DFT vectors are identified by $M_{initial} \in \{-2M_v + 1, -2M_v + 2, ..., 0\}$, $n_{3,l} = [n_{3,l}^{(0)}, ..., n_{3,l}^{(M\_v-1)}]$, and $n_{3,l}^{(f)} \in \{0, 1, ..., N_3 - 1\}$.

In the FD DFT vectors, an element (FD base) for an index $t = 0, 1, ..., N_3 - 1$ and layer $l = 1, ..., v$ of an FD base (subband) is $y_{t,l}^{(f)} = \exp(j2\pi t n_{3,l}/N_3)$. In $M_v$ FD DFT vectors, an FD DFT vector for index $f = 0, 1, ..., M_v - 1$ of the FD DFT vector is $[y_{0,l}^{(f)}, [y_{1,l}^{(f)}, ..., y_{N\_3-1,l}^{(f)}]^T$.

Each row of $W_{2,l}$ indicates channel frequency response of a specific SD beam. When the SD beam has high directivity, a channel tap per beam is limited (power delay profile becomes sparse in the time domain). As a result, channel frequency response for each SD beam has high correlation (becomes close to a flat form in the frequency domain). In this case, the channel frequency response can be approximated by linear combination of a small number of FD DFT vectors. For example, when $M_v = 2$, by using FD DFT vectors $f_2$ and $f_q$ and LC coefficients $d_1^0$ and $d_2^0$, frequency response associated with SD beam $b_0$ is approximated by $d_1^0 f_2$ +, $d_2^0 f_q$.

$M_v$ dominant FD DFT vectors are selected. With $M_v << N_3$, overhead of $\tilde{W}_l$ is much smaller than overhead of $W_{2,l}$. All or some of the $M_v$ FD DFT vectors are used to approximate frequency response of each SD beam. A bitmap is used to report only an FD DFT vector selected for each SD beam. If no bitmap is reported, all the FD DFT vectors are selected for each SD beam. In this case, NZCs of all the FD DFT vectors are reported for each SD beam. The number of NZCs in one layer $K_l^{NZ} \le K_0 = \text{ceil}(\beta \times 2LM_v)$, and the number of NZCs over all the layers $K^{N2} \le 2K_0 = \text{ceil}(\beta \times 2LM_v)$. $\beta$ is configured by a higher layer.

In the enhanced type 2 codebook of Rel. 16, the values of L, $\beta$, and $p_v$ (codebook parameter combination, parameter combination) are determined by a higher layer parameter paramCombination-r16 (codebook combination configuration).

Type 2 CSI feedback on a PUSCH in Rel. 16 includes two parts. CSI part 1 has a fixed payload size, and is used to identify the number of information bits in CSI part 2. A size of part 2 is variable (UCI size depends on the number of NZCs that is not recognized by the base station). In CSI part 1, the UE reports the number of NZCs that determines the size of CSI part 2. After receiving CSI part 1, the base station recognizes the size of CSI part 2.

In enhanced type 2 CSI feedback of Rel. 16, CSI part 1 includes an RI (if reported), a CQI, and an indicator of a total number of non-zero amplitude coefficients over a plurality of layers for enhanced type 2 CSI. The RI (if reported), the CQI, and the indicator of the total number of non-zero amplitude coefficients over a plurality of layers as fields of part 1 are separately coded. CSI part 2 includes a PMI of enhanced type 2 CSI. Parts 1 and 2 are separately coded. CSI part 2 (PMI) includes at least one of an over-sampling factor, an index of an SD base corresponding to each SD beam, an index $M_{initial}$ of an initial FD DFT vector (start offset) of a selected DFT window, an FD base selected for each layer, an NZC (amplitude and phase) for each layer, a strongest (maximum strength, maximum amplitude) coefficient indicator (SCI) for each layer, and amplitude of the strongest coefficient for each layer/each polarization.

A plurality of PMI indices (PMI values, codebook indices) associated with different pieces of CSI part 2 information may follow the following for the l-th layer.

- $i_{1,1}$: Rotation factor $[q_1\ q_2]$ in two-dimensional over-sampling. $q_1 \in \{0, 1, ..., O_1 - 1\}$ and $q_2 \in \{0, 1, ..., O_2 - 1\}$.
- $i_{1,2}$: Plurality of indices of SD bases corresponding to respective SD beams. $i_{1,2} \in \{0, 1, ..., C(N_1N_2, L) - 1\}$.
- $i_{1,5}$: Codebook indicator. Index of an FD base of a selected DFT window. $i_{1,5} \in \{0, 1, ..., 2M_v - 1\}$.
- $i_{1,6,l}$: Codebook indicator. FD base selected for the l-th layer. When $N_3 \le 19$, $i_{1,6,l} \in \{0, 1, ..., C(N_3 - 1, M_v - 1) - 1\}$. When $N_3 > 19$, $i_{1,6,l} \in \{0, 1, ..., C(2M_v - 1, M_v - 1) - 1\}$.
- $i_{1,7,l}$: Bitmap indicator for the l-th layer. Non-zero bits in the bitmap identify which coefficient out of $i_{2,4,l}$ and $i_{2,5,l}$ is to be reported. $i_{1,7,l} = [k_{l,0}^{(3)} ... k_{l,M\_v-1}^{(3)}]$, $k_{l,f}^{(3)} = [k_{l,0,f}^{(3)} ... k_{l,M\_v-1,f}^{(3)}]$, and $k_{l,i,f}^{(3)} \in \{0, 1\}$.
- $i_{1,8,l}$: Strongest coefficient indicator for the l-th layer (maximum element $k_{l,i,f}^{(2)}$ in the amplitude coefficient indicator).
- $i_{2,3,l}$: Amplitude coefficient indicator of coefficients (wideband) of (both polarizations of) the l-th layer. $i_{2,3,l} = [k_{l,0}^{(1)}\ k_{l,1}^{(1)}]$.
- $i_{2,4,l}$: Amplitude coefficient indicator of a reported coefficient (subband) of the l-th layer. $i_{2,3,l} = [k_{l,0}^{(2)} ... k_{l,M\_v-1}^{(2)}]$.
- $i_{2,5,l}$: Phase coefficient indicator of a reported coefficient (subband) of the l-th layer. $i_{2,5,l} = [c_{l,0,f} ... c_{l,M\_v-1,f}]$.

$f_l^* \in \{0, 1, ..., M_v - 1\}$ is an index of $i_{2,4,l}$, and $i_l^* \in \{0, 1, ..., 2L - 1\}$ is an index of $k_{l,f\_l^{*}}^{(2)}$. $f_l^*$ and $i_l^*$ identify the strongest coefficient for layer l = 1, ..., v, i.e., an element $k_{l,i\_l^{*},f\_l^{*}}^{(2)}$ of $i_{2,4,l}$ for layer l. A codebook index $n_{3,l}$ is remapped to $n_{3,l}^{(f)} = (n_{3,l}^{(f)} - n_{3,l}^{(f\_l^{*})})$ mod $N_3$ with respect to $n_{3,l}^{(f\_l^{*})}$, and is $n_{3,l}^{(f\_l^{*})} = 0$ after the remapping. The index f is remapped to $f = (f - f_l^*)$ mod $M_v$ with respect to $f_l^*$, and is $f_l^* = 0$ (l = 1, ..., v) after the remapping. $i_{2,4,l}$, $i_{2,5,l}$, and $i_{1,7,l}$ respectively represent the amplitude coefficient, the phase coefficient, and the bitmap after the remapping. The strongest coefficient of layer l identified by $i_{1,8,l} \in \{0, 1, ..., 2L - 1\}$ is given as $i_{1,8,l} = \Sigma_{i=0}^{i\_l^{*}} k_{l,i,0}^{(3)} - 1$ for v = 1 and given as $i_{1,8,l} = i_l^*$ for $1 < v \le 4$.

Each reported LC coefficient (complex coefficient) in $\tilde{W}_l$ is separately quantized amplitude and phase.

- Amplitude Quantization

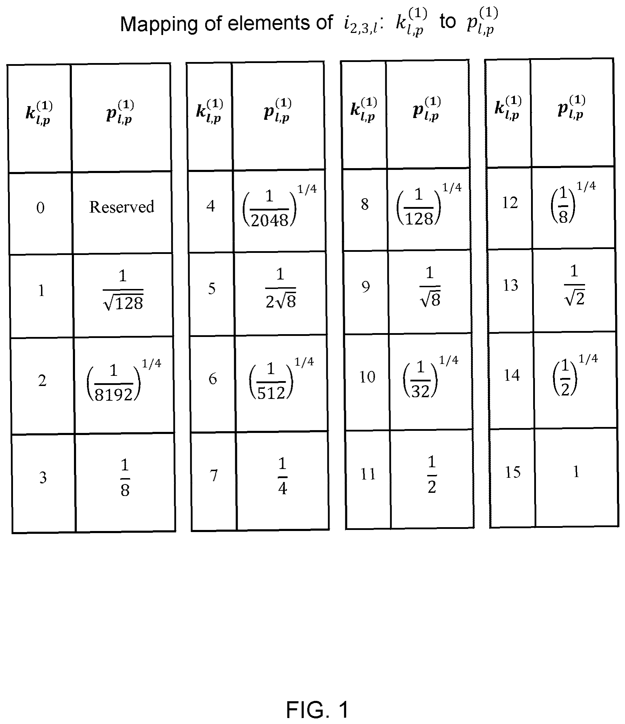

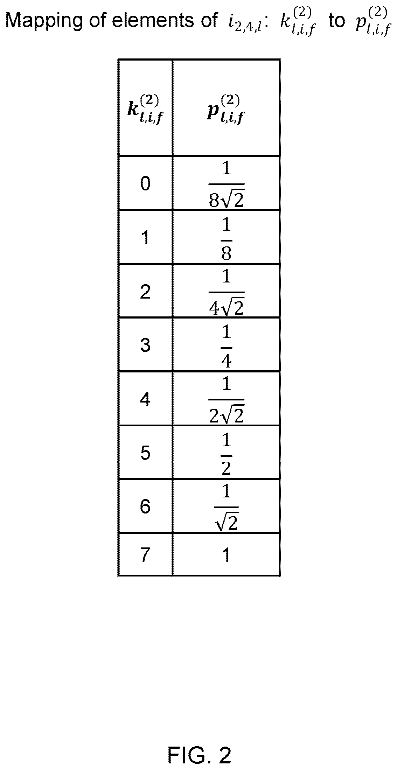

Polarization-specific reference amplitude is 16-level quantization using a table of FIG. 1 (mapping of elements of amplitude coefficient indicator $i_{2,3,l}$: mapping from amplitude coefficient indicator element $k_{l,p}^{(1)}$ to amplitude coefficient $p_{l,p}^{(1)}$). According to the table, $p_l^{(1)} = [p_{l,0}^{(1)}\ p_{l,1}^{(1)}]$ is quantized to $[k_{l,0}^{(1)}\ k_{l,1}^{(1)}]$ and $k_{l,p}^{(1)} \in \{0, ..., 15\}$. All the other coefficients are 8-level quantization using a table of FIG. 2 (mapping of elements of amplitude coefficient indicator $i_{2,4,l}$: mapping from amplitude coefficient indicator element $k_{l,i,f}^{(2)}$ to amplitude coefficient $p_{l,i,f}^{(2)}$). According to the table, $p_l^{(2)} = [p_{l,0}^{(2)} ... p_{l,M\_v-1}^{(2)}]$ and $p_{l,f}^{(2)} = [p_{l,0,f}^{(2)} ... p_{l,2L-1,f}^{(2)}]$ are quantized to $k_{l,f}^{(2)} = [k_{l,0,f}^{(2)} ... k_{l,2L-1,f}^{(2)}]$ and $k_{l,i,f}^{(2)} \in \{0, ..., 7\}$.

- Phase Quantization

Elements (amplitude coefficient indicator elements) of an amplitude coefficient indicator $i_{2,5,l}$ $[c_{l,0} ... c_{l,M\_v-1}]$ are reported by the UE (by using 4 bits). All the phase coefficients are quantized by using 16-PSK. The phase coefficients in quantity $\varphi_{l,i,f} = \exp(j2\pi c_{l,i,f}/16)$ for a phase difference are quantized to $c_{l,f} = [c_{l,0,f} ... c_{l,2L-1,f}]$ and $c_{l,i,fi} \in \{0, ..., 15\}$.

An amplitude coefficient indicator element $k_{l,floor(i\_l^{*}/L)}^{(1)} = 15$ (maximum value), an amplitude coefficient indicator element $k_{l,i\_l^{A*},0}^{(2)} = 7$ (maximum value), and a phase coefficient indicator element $c_{l,1\_l^{A*},0}^{(2)} = 0$ (minimum value), which correspond to the strongest coefficient of layer l. For l = 1, ..., v, $k_{l,floor(i\_l^{A*}/L)}^{(1)}$, $k_{l,i\_l^{A*},0}^{(2)}$, and $c_{l,i\_l^{A*},0}^{(2)} = 0$ are not reported.

$i_{1,5}$ and $i_{1,6,l}$ are PMI indices for FD base reporting. $i_{1,5}$ is reported only when $N_3 > 19$.

The precoding matrix $W^{(v)}$ represented by a codebook for a v ( = 1 to 4)-layer CSI report using 3000 to 2999+$P_{CSI-RS}$ is based on the precoding matrix $W^l$ for layer l ( = 1 to v). The precoding matrix $W^l$ is expressed by the following expression.

$$W^l_{q_1,q_2,n_1,n_2,n_{3,l},p_l^{(1)},p_l^{(2)},i_{2,5,l},t}$$

$$= \frac{1}{\sqrt{N_1 N_2 \gamma_{t,l}}} \begin{bmatrix} \sum_{i=0}^{L-1} v_{m_1^{(i)},m_2^{(i)}} p_{l,0}^{(1)} \sum_{f=0}^{M_v-1} y_{t,l}^{(f)} p_{l,i,f}^{(2)} \varphi_{l,i,f} \\ \sum_{i=0}^{L-1} v_{m_1^{(i)},m_2^{(i)}} p_{l,1}^{(1)} \sum_{f=0}^{M_v-1} y_{t,l}^{(f)} p_{l,i+L,f}^{(2)} \varphi_{l,i+L,f} \end{bmatrix}, l = 1,2,3,4,$$

$$\gamma_{t,l} = \sum_{i=0}^{2L-1} \left( p_{l,\lfloor \frac{i}{L} \rfloor}^{(1)} \right)^2 \left| \sum_{f=0}^{M_v-1} y_{t,l}^{(f)} p_{l,i,f}^{(2)} \varphi_{l,i,f} \right|^2$$

$$(G1)$$

Here, beam index i = 0, 1, ..., L - 1, $m_1^{(i)} = O_1 n_1^{(i)}+q_1$, $m_2^{(i)} = O_2 n_2^{(i)}+q_2$, $n_1^{(i)} \in \{0, 1, ..., N_1 - 1\}$, and $n_2^{(i)} \in \{0, 1, ..., N_2 - 1\}$. $n_1^{(i)}$ and $n_2^{(i)}$ are SD bases for indicating an SD beam i. $v_{m\_l^{(i)},m\_2^{(i)}}$ is a DFT vector indicating an SD beam. $p_{l,0}^{(1)}$ indicates a wideband amplitude coefficient. $p_{l,i,f}^{(2)}$ indicates a subband amplitude coefficient. $\varphi_{l,i,f}$ indicates a phase coefficient. In this manner, the codebook for each layer includes the strongest coefficient for each polarization, the amplitude coefficient for each SD beam for each FD beam for each polarization, and the phase coefficient for each SD beam for each FD beam for each polarization.

As grouping of CSI parts 2, for a given CSI report, PMI information is grouped into three groups (groups 0 to 2). This is important for a case where CSI omission is performed. Each reported element of indices $i_{2,4,l}$, $i_{2,5,l}$, and $i_{1,7,l}$ is associated with a specific priority rule. Groups 0 to 2 follow the following.

- Group 0: indices $i_{1,1}$, $i_{1,2}$ and $i_{1,8,l}$ (l = 1, ..., v)
- Group 1: highest (higher) $v2LM_v$-floor($K^{NZ}/2$) priority elements in index $i_{1,5}$ (if reported) and indices $i_{1,6,l}$ and $i_{1,7,l}$ (if reported), highest (higher) ceil ($K^{NZ}/2$)-v priority elements in $i_{2,3,l}$ and $i_{2,4,l}$, and highest (higher) ceil ($K^{NZ}/2$)-v priority elements in $i_{2,5,l}$ (l = 1, ..., v)
- Group 2: lowest (lower) floor ($K^{NZ}/2$) priority elements in $i_{1,7,l}$, lowest (lower) floor ($K^{NZ}/2$) priority elements in $i_{2,4,l}$, and lowest (lower) floor($K^{NZ}/2$) priority elements in $i_{2,5,l}$ (l = 1, ..., v)

In the type 1 CSI, an SD beam indicated by using an SD DFT vector is transmitted to the UE. In type 2 CSI, L SD beams are linearly coupled and transmitted to the UE. Each SD beam can be associated with a plurality of FD DFT vectors (FD beams, FD bases, frequency responses). For corresponding SD beams, channel frequency response can be obtained by using linear combination of FD DFT vectors for the SD beams. The channel frequency response corresponds to the power delay profile.

- Type 2 Port Selection Codebook

In type 2 port selection (PS) CSI (type 2 PS codebook) of Rel. 15, the UE does not need to derive SD beams in consideration of SD DFT vectors as in the type 2 CSI. The base station transmits CSI-RSs by using K CSI-RS ports beamformed in consideration of a set of SD beams. The UE selects/identifies the best L ($\leq$K) CSI-RS ports for each polarization, and reports indices of these ports in $W_1$. The type 2 PS CSI of Rel. 15 supports ranks 1 and 2.

- Enhanced Type 2 Port Selection Codebook (Rel. 16)

Operation of type 2 PS CSI (enhanced type 2 PS codebook) of Rel. 16 is similar to that of the type 2 CSI of Rel. 16, except for selection of the SD beams. The type 2 PS CSI of Rel. 15 supports ranks 1 to 4.

The precoding matrix $W_l$ for precoder generation for each subband (subband (SB)-wise) for layer $l \in \{1, 2, 3, 4\}$ is expressed by the following expression.

$$W_1(N_t \times N_3) = QW_1W\tilde{}_1W_{f,1}^H \quad (H1)$$

Here, $Q(N_t \times K)$ indicates K SD beams used for CSI-RS beamforming. $W_1(K \times 2L)$ is a block diagonal matrix. $W\tilde{}_l$ $(2L \times M)$ is an LC coefficient matrix. $W_{f,l}(N_3 \times M)$ is a matrix including M vectors (FD base vectors), and each vector includes $N_3$ FD bases. K is configured by a higher layer. L is configured by a higher layer. $P_{CSI-RS} \in \{4, 8, 12, 16, 24, 32\}$. When $P_{CSI-RS} > 4$, $L \in \{2,3,4\}$.

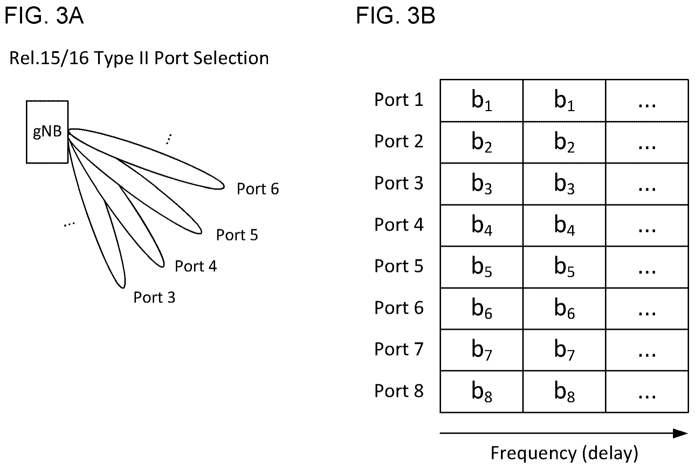

In the type 2 PS CSI of Rel. 15/16, each CSI-RS port #i is associated with an SD beam $b_i$ (FIGS. 3A and 3B).

The type 2 PS CSI of Rel. 16 has the number of FD base vectors reduced from $N_3$ to $M_v$ ($M_v << N_3$) similarly to the type 2 CSI of Rel. 16, and has thereby reduced overhead compared to the type 2 PS CSI of Rel. 15.

- Further Enhanced Type 2 Port Selection Codebook (Rel. 17)

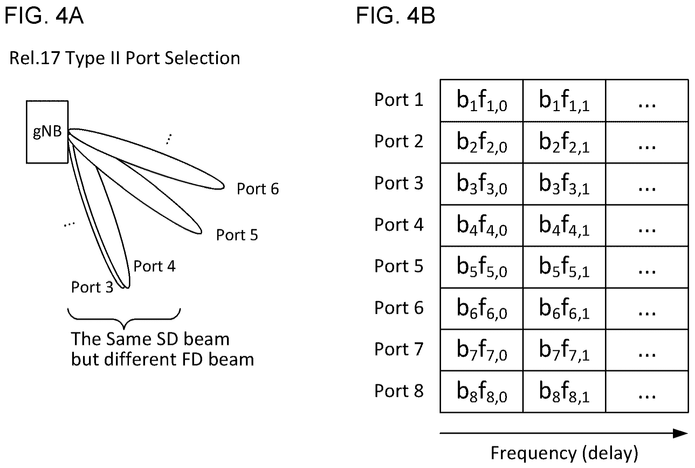

In type 2 PS CSI/codebook (further enhanced type 2 PS codebook) of Rel. 17, each CSI-RS port #i is associated with an SD-FD beam pair (pair of SD beam $b_i$ and FD beam $f_{i,j}$ (where j is a frequency index)) in place of an SD beam (FIGS. 4A and 4B). In this example, ports 3 and 4 are associated with the same SD beam and are associated with different FD beams.

Frequency selectivity of channel frequency response observed by the UE based on an SD beam-FD beam pair can be reduced by delay pre-compensation more than frequency selectivity of channel frequency response observed by the UE based on an SD beam.

A primary scenario for the type 2 PS codebook of Rel. 17 is FDD. Channel reciprocity based on SRS measurement is incomplete (angles between a UL beam and a DL beam may be different, a UL frequency and a DL frequency are different in FDD, and effective antenna intervals are different in the UL frequency and the DL frequency). However, the base station can obtain/select some pieces of partial information (dominant angles and delays (SD beams and FD beams)). By using SRS measurement by the base station in addition to CSI reporting, the base station can obtain CSI for determination of a DL MIMO precoder. In this case, some CSI reports may be omitted to reduce CSI overhead.

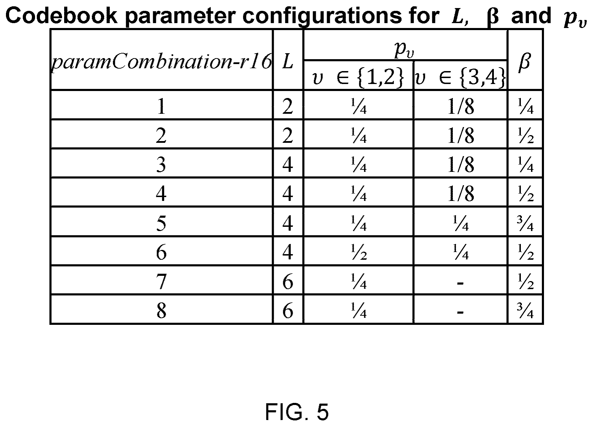

FIG. 5 shows an example of parameter combinations for the Rel-16 type 2 codebook. L is the number of SD beams. $p_v$ is a parameter for calculation of number $M_v = \text{ceil}(p_v \times N_3/R)$, which is the number of FD base vectors for rank v. $\beta$ is a parameter for calculation of a maximum number of NZCs.

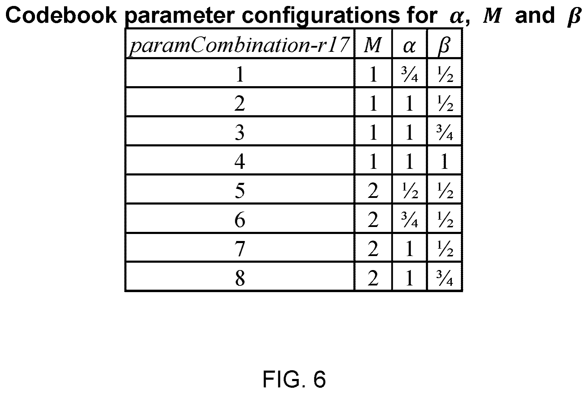

In the further enhanced type 2 PS codebook of Rel. 17, the values of $\alpha$, M, and $\beta$ (codebook parameter combination, parameter combination) are determined by a higher layer parameter paramCombination-r17 (codebook parameter configuration). FIG. 6 shows an example of parameter combinations for the further enhanced type 2 PS codebook of Rel. 17. $\alpha$ is a parameter for calculation of number $K_1 = \alpha P_{CSI-RS}$, which is the number of selected CSI-RS ports in the PS codebook. M is the number of FD base vectors. $\beta$ is a parameter for calculation of a maximum number of NZCs. The precoding matrix indicated by the PMI is determined from L+M vectors. Here, $L = K_1/2$, and $K_1 = \alpha P_{CSI-RS}$.

In the further enhanced type 2 PS CSI of Rel. 17, each CSI-RS port is beamformed by using an SD beam and an FD beam. Each port is associated with an SD-FD beam pair.

The precoding matrix $W_l$ for the given layer l is expressed by the following expression.

$$W_1(K \times N_3) = W_1W\tilde{}_1W_{f,1}^H \quad (H2)$$

For $W_1(K \times 2L)$, each matrix block is formed by L columns of a $K \times K$ identity matrix. The base station transmits K beamformed CSI-RS ports. Each port is associated with an SD-FD beam pair. The UE selects L ports from K ports, and reports an index indicating the selected ports to the base station as a part of the PMI. Note that, in Rel. 16, each port is associated with an SD beam.

$W\tilde{}_l(2L \times M_v)$ is a matrix including combination coefficients (subband complex LC coefficients). Up to $K_0$ NZCs are reported. The report includes two parts: a bitmap indicating an NZC location, and a quantized NZC.

In the further enhanced type 2 PS CSI of Rel. 17, $K_l^{NZ} = \Sigma_{i=0}^{k1-1}\Sigma_{f=0}^{M-1}k_{l,i,f}^{(3)} \leq K_0$ is the number of non-zero coefficients in layer l = 1, ..., v, and $K^{NZ} = \Sigma_{l=1}^{v}K_l^{NZ} \leq 2K_0$ is the total number of non-zero coefficients. If $v \leq 2$ and $K^{NZ} = K_1Mv$, $i_{1,7,l}$ for layer l = 1, ..., v (bitmap indicator for the l-th layer) is not reported. In other words, when the total number of reported NZCs is equal to the maximum number of $K_1Mv$ and $v \leq 2$, the report of the bitmap indicating the location of the NZCs is omitted. Note that, in Rel. 16, the bitmap of the NZC location is always reported.

$W_{f,l}(N_3 \times M_v)$ is a matrix including $M_v$ ($M_v$ = 1 or 2) FD base vectors for each layer. Each vector includes $N_3$ FD bases (FD-DFT bases). The base station may remove $W_{f,l}$. When $M_v$ = 1, $W_{f,l}$ is off, and no additional FD base vectors are reported. When $M_v$ = 2, $W_{f,l}$ is on, and $M_v$ additional FD base vectors are reported. When $M_v$ = 2, FD base window size $N \in \{2, 4\}$ is configured by a higher layer parameter (valueOfN). Note that, in Rel. 16, $W_{f,l}$ is always reported.

(Restriction Configuration of Type 2 Codebook)

When the UE is configured with the higher layer parameter (codebook type, codebookType) set to 'typeII', the bitmap parameter (type 2 RI restriction, typeII-RI-Restriction) forms bit sequences $r_1$ and $r_0$. Here, $r_0$ is a least significant bit (LSB), and $r_1$ is a most significant bit (MSB). When $r_i$ is zero for $i \in \{0, 1\}$, the report of the PMI and the RI is not permitted to correspond to any precoder associated with $v = i + 1$.

A bitmap parameter n1-n2-codebookSubsetRestriction forms a bit sequence $B = B_1B_2$. Here, the bit sequences $B_1$ and $B_2$ are concatenated to form B. To define $B_1$ and $B_2$, $O_1O_2$ vector groups $G(r_1, r_2)$ are first defined as the following expression.

$$G(r_1, r_2) = \{v_{N\_1*r\_1+x\_1, N\_2*r\_2+x\_2}: x_1 = 0, 1, ..., N_1 - 1; x_2 = 0, 1, ..., N_2 - 1\}$$

$$r_1 \in \{0, 1, ..., O_1 - 1\}$$

$$r_2 \in \{0, 1, ..., O_2 - 1\}$$

The UE is configured with restriction for four vector groups indicated by $(r_1^{(k)}, r_2^{(k)})$ for $k = 0, 1, 2, 3$ and identified by group index $g^{(k)} = O_1r_2^{(k)} + r_1^{(k)}$ for $k = 0, 1, 2, 3$. The indices are assigned so that $g^{(k)}$ increases when k increases. The rest of the vector groups are not restricted.

- If $N_2$ = 1 and $g^{(k)} = k$ for $k = 0, 1, 2, 3$, $B_1$ is empty.
- If $N_2 > 1$, $B_1 = b_1^{(10)}, ..., b_1^{(0)}$ is a binary expression of an integer $\beta_1$. Here, $b_1^{(10)}$ is an MSB, and $b_1^{(0)}$ is an LSB. $\beta_1$ is obtained from $\beta_1 = \Sigma_{k=0}^3 C(O_1O_2 - 1 - g^{(k)}, 4 - k)$. Here, $C(x, y)$ is a binomial coefficient. The group index $g^{(k)}$ and indicator $(r_1^{(k)}, r_2^{(k)})$ for $k = 0, 1, 2, 3$ are obtained from $\beta_1$ by using the following algorithm.
  $s_{-1} = 0$ for $k = 0, 1, 2, 3$

Find maximum $x^* \in \{3 - k, ..., O_1O_2 - 1 - k\}$ such that $\beta_1 - s_{k-1} \geq C(x^*, 4 - k)$.

$$e_k = C(x^*, 4 - k)$$

$$s_k = s_{k-1} + e_k$$

$$g^{(k)} = O_1O_2 - 1 - x^*$$

$$r_1^{(k)} = g^{(k)} \bmod O_1$$

$$r_2^{(k)} = (g^{(k)} - r_1^{(k)})/O_1$$

The bit sequence $B_2 = B_2^{(0)}B_2^{(1)}B_2^{(2)}B_2^{(3)}$ is a concatenation of bit sequences $B_2^{(k)}$ corresponding to $g^{(k)}$ for $k = 0, 1, 2, 3$. The bit sequences $B_2^{(k)}$ are defined as $B_2^{(k)} = b_2^{(k,2N\_1*N\_2-1)}, ..., b_2^{(k,0)}$.

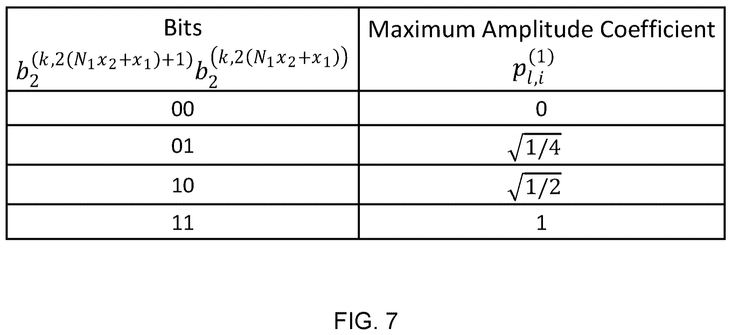

A bit $b_2^{(k,2(N\_1*x\_2+x\_1)+1)}b_2^{(k,2(N\_1*x\_2+x\_1))}$ indicates a maximum allowable amplitude coefficient $p_{l,i}^{(1)}$ for a vector in the group $g^{(k)}$ assigned an index by $x_1$ and $x_2$. The maximum allowable amplitude coefficient is given in the table of FIG. 7. The UE that does not report a parameter amplitudeSubsetRestriction = 'supported' in capability signaling does not expect that $b_2^{(k,2(N\_1*x\_2+x\_1)+1)}b_2^{(k,2(N\_1*x\_2+x\_1))}$ = 01 or 10 is configured.

(Restriction Configuration of Enhanced Type 2 Codebook)

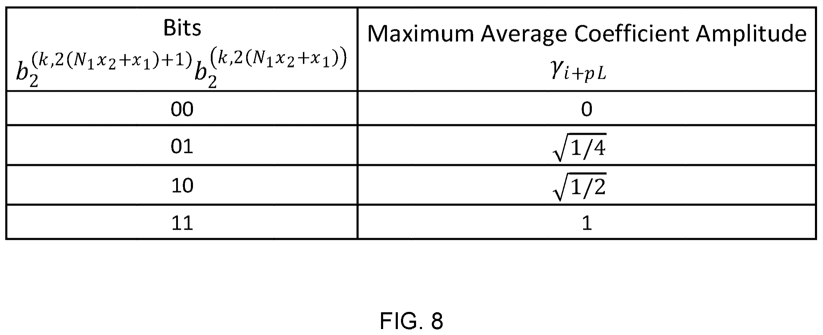

A bitmap parameter n1-n2-codebookSubsetRestriction-r16 forms the bit sequence $B = B_1B_2$, and configures the vector group index $g^{(k)}$, similarly to the type 2 codebook. The bit $b_2^{(k,2(N\_1^*x\_2+x\_1)+1)}b_2^{(k,2(N\_1^*x\_2+x\_1))}$ indicates maximum allowable average amplitude $\gamma_{i+pL}$ ($p = 0, 1$) of a coefficient associated with a vector in the group $g^{(k)}$ assigned an index by $x_1$ and $x_2$ for $i \in \{0, 1, ..., L - 1\}$. Maximum amplitude (maximum allowable average amplitude, maximum average coefficient amplitude) is given in the table of FIG. 8, and average coefficient amplitude for $l = 1, ..., v$ and $p = 0, 1$ is restricted by the following expression.

$$\sqrt{\frac{1}{\sum_{f=0}^{M_v-1} k_{l,i+pL,f}^{(3)}} \sum_{f=0}^{M_v-1} k_{l,i+pL,f}^{(3)} \left( p_{l,p}^{(1)} p_{l,i+pL,f}^{(2)} \right)^2} \leq \gamma_{i+pL} \qquad (I1)$$

The UE that does not report a parameter softAmpRestriction-r16 = 'supported' in capability signaling does not expect that $b_2^{(k,2(N\_1^*x\_2+x\_1)+1)}b_2^{(k,2(N\_1^*x\_2+x\_1))}$ = 01 or 10 is configured.

n1-n2-codebookSubsetRestriction/n1-n2-codebookSubsetRestriction-r16 indicates the number of antenna ports ($N_1$, $N_2$) in a first dimension and a second dimension and CBSR. The number of bits of CBSR (bitmap) is ceil ($\log_2$(nchoosek($O_1^*O_2$, 4))) + 8*n1*n2. Here, nchoosek(a, b) = a! / (b! (a - b)!).

(JT)

Joint transmission (JT) may mean simultaneous data transmission from a plurality of points (for example, TRPs) to a single UE.

Rel. 17 supports non-coherent joint transmission (NCJT) from two TRPs. PDSCHs from the two TRPs may be independently precoded and independently decoded. Frequency resources may be nonoverlapping, partially overlapping (partial-overlapping), or fully overlapping (full-overlapping). When the overlap occurs, a PDSCH from one TRP interferes with a PDSCH from another TRP.

In Rel. 18, support of coherent joint transmission (CJT, mTRP CJT) using up to four TRPs has been under study. Data from four TRPs may be coherently precoded and transmitted to the UE on the same time-frequency resource. For example, the same precoding matrix may be used in consideration of channels from four TRPs. "Coherent" may mean that phases of a plurality of received signals have a given relationship with each other. Signal quality may be improved by using 4-TRP joint precoding, and there may be no interference between the four TRPs. The data may receive only interference outside the four TRPs.

(NCJT CSI)

In Rel. 17, a scenario allowing for application of an NCJT CSI report is single-DCI-based MTRP NCJT with the type 1 single-panel codebook. For NCJT CSI measurement, in single CSI-ReportConfig, two CMR groups with each channel measurement resource (CMR) from one TRP can be configured. One CSI report mode can be configured from two modes.

By RRC signaling, CSI-ReportConfig for Rel-17 non-coherent joint transmission (NCJT) CSI configures a CMR and a CSI report mode (csi-ReportMode).

Two CMR groups with $K_s = K_1+K_2$ CMRs are configured for the UE. $2 \leq K_s \leq 8$ holds. $K_s$ CMRs correspond to the NZP-CSI-RS resource set for channel measurement. $K_1$ and $K_2$ are each the number of CMRs in two CMR groups. From selection out of all possible pairs, N (N sets of) CMR pairs (resource pairs) are configured by a higher layer. N = 1 and $K_s = 2$ are supported. Support of $N_{max} = 2$ is an optional feature of the UE. Support of $K_{S,max} = X$ is an optional feature of the UE. Each CMR can include up to 32 CSI-RS ports, depending on a UE capability. Each CMR pair is associated with one CRI value.

The bitmap with RRC signaling indicates one CMR from each CMR group, and thereby indicates N (N = 1, 2) CMR pairs actually used for NCJT measurement. The UE measures single TRP CSI for TRP 1 and single TRP CSI for TRP 2 by using the CMRs in two CMR groups, and measures NCJT CSI by using N CMR pairs.

The UE selects one or more CSIs to be reported, based on the mode (CSI report mode) configured by csi-ReportMode. csi-ReportMode indicates one of two modes (NCJT CSI modes) of the following modes 1 and 2.

- Mode 1

The UE may be configured to report X CSIs associated with a single-TRP measurement hypothesis and one CSI associated with an NCJT measurement hypothesis. X = 0, 1, 2. When X = 2, two CSIs are associated with two different single-TRP measurement hypotheses with a plurality of CMRs from a plurality of different CMR groups. Support of X = 1, 2 is an optional feature of the UE for the UE supporting option 1.

- Mode 2

The UE is configured to report one CSI associated with the best one out of NCJT and single-TRP measurement hypotheses.

In mode 1, the UE reports X+1 CSIs as a total number, including X (X = 0, 1, 2) single TRP CSIs and one NCJT CSI. In mode 2, the UE reports one best CSI (one CSI) out of all the single TRP CSIs and one NCJT CSI.

In one CSI report, up to two single TRP CSIs and one NCJT CSI can be reported (mode 1 with X = 2). The NCJT CSI includes one CRI, two RIs (with one joint RI index), two PMIs, two LIs, and one CQI (four layers or less). The single TRP CSI is the same as existing CSI, and includes one CRI, one RI/PMI/LI, and one or two CQIs (eight layers or less, one CQI for each CW).

For the following some cases, new mapping orders (tables) of a plurality of fields in one CSI report are defined.

-    Mapping order of wideband CSI for mode 1 with X = 0. The wideband CSI is supported only for mode 1 with X = 0, that is, the NCJT CSI.
-    Mapping order of CSI part 1 for modes 1 and 2.
-    Mapping order of a CSI part 2 wideband for modes 1 and 2.
-    Mapping order of a CSI part 2 subband for modes 1 and 2.

(CJT CSI)

In an ideal case (where the four TRPs are collocated (assumed to be located at the same position)), joint estimation of aggregated channel matrix H can be performed and joint precoding matrix V can be fed back. However, there is a case where large-scale path losses of four paths are significantly different from each other. Joint precoding matrix V based on a constant module codebook is not exact. In this case, feedback per TRP and an inter-TRP coefficient can be consistent with each other by a type 2 codebook of existing NR.

For CJT with up to four TRPs in FR1, selection of four TRPs may be semi-static. Thus, the selection and configuration of four CMRs (four CSI-RS resources) for channel measurement may also be semi-static. Dynamic indication of four TRPs from a list of CSI-RS resources is also available, but is unlikely.

Path losses from the respective four TRPs to the UE are different from each other. Thus, it is difficult to perform the dynamic indication only by reporting one aggregated CSI indicating a joint channel matrix.

In consideration of operation for fallback to NCJT (that is, a single TRP), CSI per TRP (that is, single-TRP CSI such as NCJT CSI of Rel. 17) may also be considered.

Based on the assumption of ideal backhaul, synchronization, and the same number of antenna ports over a plurality of TRPs, CSI acquisition for coherent joint transmission (CJT) for FR1 and up to four TRPs is under study. For CJT multi-TRP for FDD, improvement of a type 2 codebook of Rel. 16/17 is under study.

$W_1$ (matrix indicating SD DFT vectors)/$W_f$ (matrix indicating FD DFT vectors) for respective TRPs may be the same or different from each other. $W_1$(NZCs) for the respective TRPs may be different from each other. $W_1/W_f/W_l$ for the respective TRPs may be selected jointly or individually. It is preferable that different scenarios with different options are present for designs of $W_1/W_f/W_l$. $W_\varphi$ may be reported as an individual content, or may be reported in $W_l$. These used policies relate to an arrangement scenario (for example, intra-site multi-TRP or inter-site multi-TRP).

For example, a precoding matrix for 4-TRP CJT CSI (codebook) may be indicated by $W_1/W_f/W_l$ for the respective TRPs. $W_1$ for the respective TRPs may be the same or different from each other, and may be selected jointly or individually. $W_l$ for the respective TRPs may be different from each other, and may be selected jointly or individually. $W_f$ for the respective TRPs may be the same or different from each other, and may be selected jointly or individually.

In the (Rel-18) type 2 codebook (codebook structure) for the CJT multi-TRP (mTRP), at least one of the following some modes (CJT codebook modes, CJT CSI modes) may be supported.

-    Mode 1 is SD/FD base selection for each TRP/each TRP group. It permits independent FD base selection over N TRPs/TRP groups. For example, the codebook structure is given by the following expression. Here, N is the number of TRPs or TRP groups.

$$\begin{bmatrix} W_{1,1}\widetilde{W}_{2,1}W_{f,1}^{H} \\ \vdots \\ W_{1,N}\widetilde{W}_{2,N}W_{f,N}^{H} \end{bmatrix} \tag{J1}$$

- Mode 2 is SD base selection for each TRP/each TRP group (port group or resource) and joint/common FD base selection (over N TRPs/TRP groups). For example, the codebook structure is given by the following expression. Here, N is the number of TRPs or TRP groups.

$$\begin{bmatrix} W_{1,1}\widetilde{W}_{2,1}W_{f}^{H} \\ \vdots \\ W_{1,N}\widetilde{W}_{2,N}W_{f}^{H} \end{bmatrix} \tag{J2}$$

In these two modes, detailed designs, such as parameter combination, base selection, TRP (group) selection, reference amplitude, and $W_2$ quantization, may be made common.

(Doppler CSI)

It is studied to enhance/enhance capability of the CSI report for the UE that moves at a high speed/intermediate speed by using time-domain correlation/Doppler-domain (DD) information. For example, studies have been carried out on improvement of the type 2 codebook of Rel. 16/17 and reporting of time domain channel properties (TDCP) measured via a tracking CSI-RS (tracking RS (TRS)) from the UE without changing spatial domain bases and frequency domain bases.

Channel coherent time (CCT) is dependent upon a maximum Doppler shift. The channel coherent time is time in which the measured channel properties are available or time until the measured channel properties become no longer available (channel aging). The maximum Doppler shift is estimated based on a relative speed between a transmitting device and a receiving device. The channel coherent time $T_c$ is approximated by $1/\Delta f_{max}$. Here, $\Delta f_{max} = v/\lambda$. As the moving speed of the UE is higher, the channel coherent time is shorter. For example, in a carrier frequency of 4.5 GHz, when the moving speed exceeds approximately 25 km/h, the channel coherent time falls below 10 ms. How to address such a high moving speed and a short channel coherent time poses a problem.

To follow the Doppler shift, the TRS is supported. However, the TRS has the following problems.

- The number of ports per CSI-RS resource set is limited to only one. Each CSI-RS resource uses a single port.
- A configurable period is 10 ms or more.
- The CSI report for the TRS is not assumed. There is no report configuration for the P-TRS. Although a report can be configured, the report quantity (reportQuantity) is set only to 'none'. Up to 16 CSI-RS resources are used per CSI-RS resource set.

The TRS is mapped to time domain and frequency domain resources. For measurement of influence due to the Doppler shift, a plurality of RSs in the time domain are required in specific frequency domain resources.

For measurement of influence due to the Doppler shift, using the CMRs is considered. However, the RS used for measurement is dependent upon implementation of the UE.

In quantity of the CSI report, information related to the Doppler shift is not supported. Information for determination of $W = W_1W_2$ is reported by the UE via a CSI codebook (PMI). Here, $W_1$ is wideband property, and indicates a spatial beam. $W_2$ is subband property, and indicates a coefficient of amplitude/phase for each spatial beam.

Regarding measurement related to the Doppler shift, case 1 in which the UE performs measurement based on the CSI-RS and case 2 in which the base station performs measurement based on the SRS are considered. Regarding determination of influence related to the Doppler shift, case 1-1 in which the UE performs determination based on CSI-RS measurement results, case 1-2 in which the base station performs determination based on CSI-RS measurement results reported by the UE, and case 2-1 in which the base station performs determination based on SRS measurement results are considered.

A CSI-RS measurement window and a CSI reporting window are under study. In the CSI-RS measurement window, one or more CSI-RS occasions may be measured. A reported CSI may be associated with the CSI reporting window.

The length (number of DD/TD bases) of the Doppler-domain (DD)/time-domain (TD) base vectors (DFT base vectors) may be represented by $N_4$, assuming the CSI report in slot n. In the CSI measurement window of slot[k, k + $W_{meas}$ -

1], one or more CSI occasions for calculation of the CSI report may be measured. Here, k may be a slot index, and $W_{meas}$ may be a measurement window length (the number of slots). The CSI occasion may be configured in CSI-ReportConfig. The CSI reporting window of slot[l, l + $W_{CSI}$ - 1] may be associated with the CSI report in the slot n. Here, l may be a slot index, and $W_{CSI}$ may be a reporting window length (the number of slots). The position of a CSI reference resource may be represented by $n_{ref}$.

Duration of the CSI reporting window is $W_{CSI}$ = $dN_4$. d and $N_4$ are determined by a CMR configuration. A starting point of the CSI reporting window is slot l. l = (n - $N_{CSI,ref}$) may hold. l = (n + $\delta$) may hold. $\delta$ = {0, 2} may hold, or $\delta$ = {0, 1, 2} may hold.

d slots may be duration in DD units.

When the UE-side prediction is assumed, it is supported that the UE predicts CSI/channel after slot l, and the base station configures the position of the slot l (from a plurality of candidate values) via higher layer signaling. A plurality of candidates of the slot l position include existing CSI reference resource positions (n - $N_{CSI,ref}$) and (n + $\delta$). Here, $\delta$ > 0. The existing CSI reference resource in existing operation, i.e., (n - $N_{CSI,ref}$), is reused to indicate the position of the last CSI-RS occasion used for the CSI report.

For the parameter $\delta$, additional value 2 is supported.

$N_4$ is configured by the base station via higher layer signaling.

In $N_4$ = 1, the DD base may be the same (identity). There may not be DD compression. The codebook structure in this case may be the following expression, for example.

$$W = W_1 \widetilde{W_2}\left(W_f\right)^H \tag{J3}$$

In $N_4$ > 1, the Doppler-domain orthogonal DFT bases may be selected in common for all the SD/FD bases. The codebook structure in this case may be the following expression, for example.

$$W = W_1 \widetilde{W_2}\left(W_f \otimes W_d\right)^H \tag{J4}$$

Only Q > 1 indicating the number of selected Doppler-domain (DD) base vectors is permitted. Detailed designs of the SD/FD bases, including an associated UCI parameter, follow existing specifications.

(Near-Field)

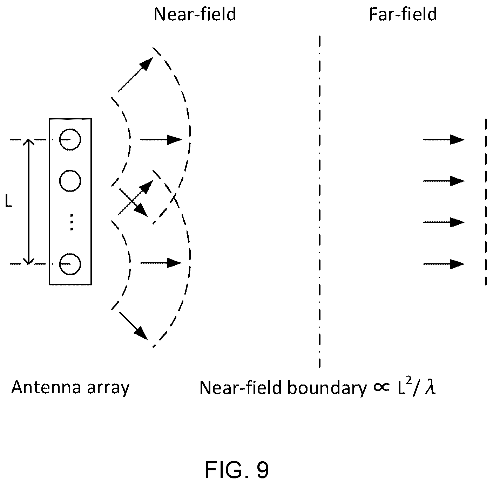

A radiation field of an antenna array can be divided into a far-field (FF) and a near-field (NF). When the length of the array is represented by L and the wavelength of the carrier is represented by A, a boundary between the NF and the FF (distance from the array) is proportional to $L^2/\lambda$, as in the example of FIG. 9. A wavefront in the FF is approximately planar, and an array response is dependent only upon an angle. A wavefront in the NF is regarded as a spherical wavefront, and an array response is dependent upon both of an angle and a distance.

Primary technologies for the NF include the following.

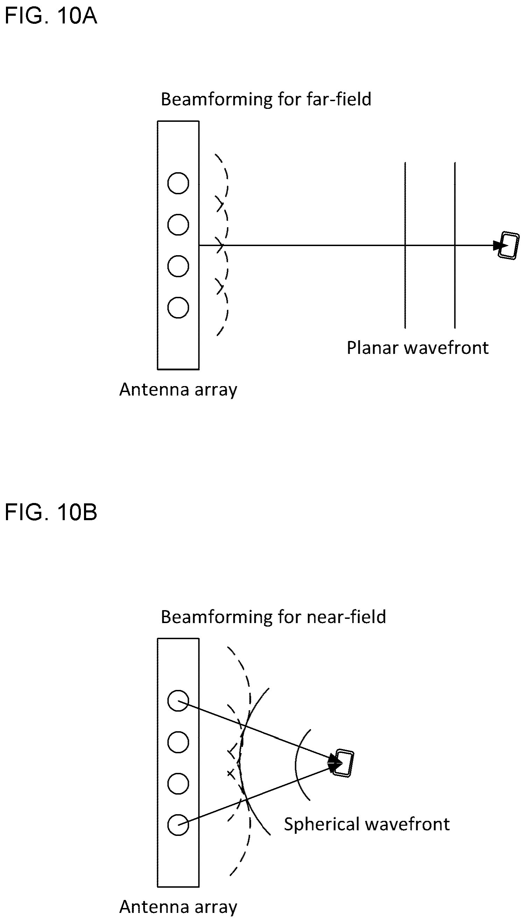

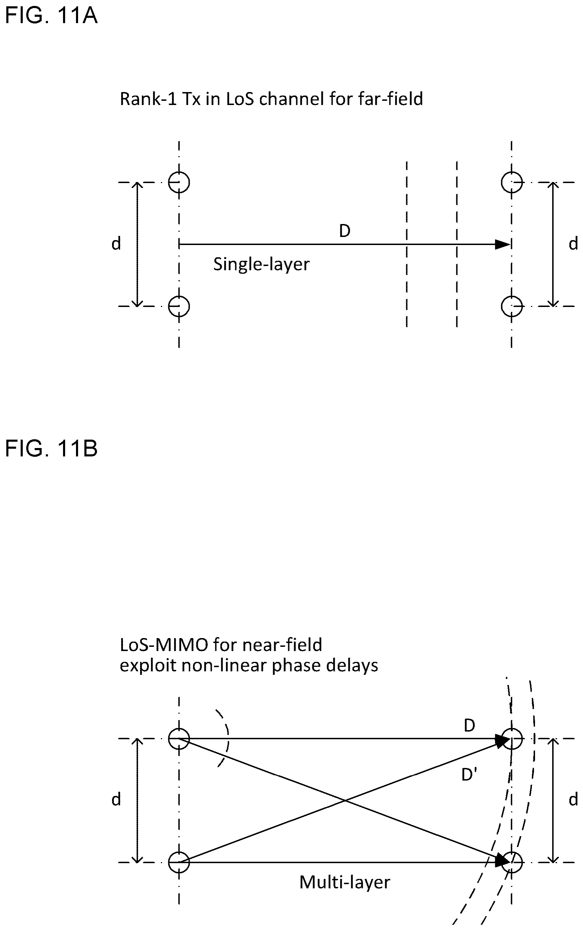

- Beamfocusing: It conforms to the spherical wavefront to achieve a complete array gain and improve the SNR. Beamforming in the FF forms a planar wavefront as in the example of FIG. 10A, whereas beamforming in the NF forms a spherical wavefront for the UE as in the example of FIG. 10B.
- LoS-MIMO: It improves user throughput by using non-linear phase delay for spatial multiplexing in a LoS-dominant channel. A LoS channel in the FF uses one wavefront/path/distance (D) as in the example of FIG. 11A, whereas LoS-MIMO in the NF uses different phases/distances (D, D') depending on a combination of antenna elements in Tx-RX as in the example of FIG. 11B.

The spherical wavefront and a large transmit antenna interval and a large receive antenna interval enable separation of a plurality of signal streams in the LoS channel. An optimal transmit antenna interval and an optimal receive antenna interval are dependent upon a carrier frequency and a transmission (Tx)-reception (Rx) distance. A non-optimal transmit antenna interval and a non-optimal receive antenna interval bring about such performance deterioration as to disable LoS-MIMO. In other words, a plurality of signal streams are not separated, and only rank-1 transmission is enabled.

In 2×2 LoS channels using Tx/Rx antennas having wide intervals, two Rx signals are superimposed regarding crosstalk with delayed phase. Rx processing combines two Rx signals constructively (in an intensifying or in-phase manner), and removes crosstalk. The two spatially separated antennas give a path phase difference $\Delta_\varphi$. When an interval between two transmit antennas is represented by $d_1$, an interval between two receive antennas is represented by $d_2$, a

distance between the transmit antenna and the receive antenna is represented by D, and a wavelength of the carrier is represented by $\lambda$, an optimal antenna interval is $d_1 d_2 = DA/2$, which gives $\Delta_\varphi = 90°$.

In a scenario in which network performance can be enhanced by using a plurality of distributed TRPs, such as a hot spot area in an initial phase, the use of millimeter waves (mmWave) is under study. For example, examples of the scenario include a factory, a shopping mall, a central area of a city (dense urban), and the like. For example, it is considered that a plurality of panels are located on a roof or a high place, and the UE is located on the ground or on a floor. In the mmWave multi-TRP (mTRP) scenario, a line-of-sight (LOS)-dominant channel is assumed, and cooperation of a plurality of TRPs is required to support new technology such as LoS-MIMO for an ultra-high speed data rate. Cooperation of a plurality of TRPs is equivalent to creating a sufficiently large NF, and enables beamfocusing and LoS-MIMO. When the carrier frequency is 28 GHz in a central area of a city, a transparent NF range of two TRPs may be 16.8 m for two TRPs at an interval of 20 cm, may be 67 m for two TRPs at an interval of 50 cm, and may be 226 m for two TRPs at an interval of 1 m.

(Existing Codebooks)

To support mmWave mTRP cooperation, a precoding matrix index (PMI) report, preferably a PMI report having low feedback overhead, is required.

The type 1 multi-panel codebook is designed for a plurality of panels having narrow intervals, i.e., a plurality of panels having intervals equivalent to the wavelength, and if the plurality of panels are arranged away from each other, performance loss occurs.

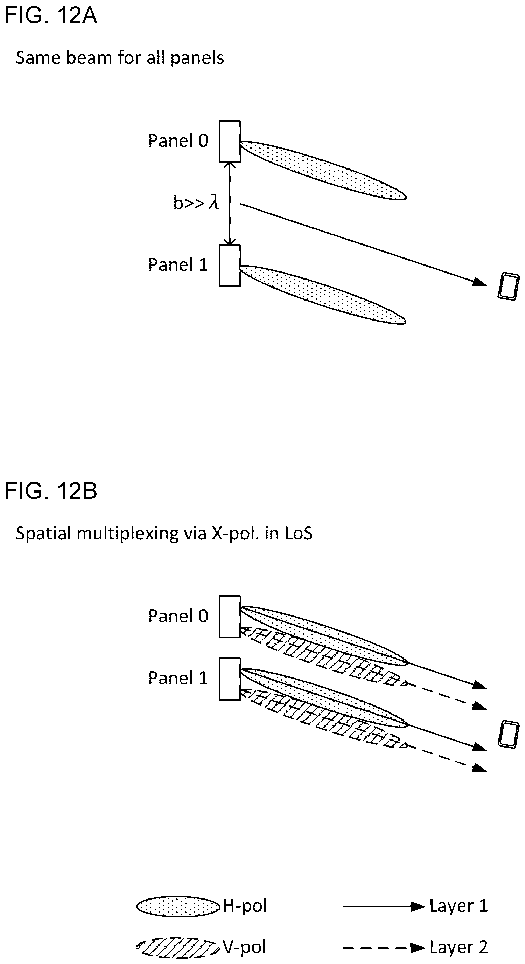

In the type 1 multi-panel codebook, common spatial domain beams are applied to all the panels. When the plurality of panels are distant apart as in panels 0 and 1 in the example of FIG. 12A (b >> $\lambda$), the beams are not optimal. The use of the same beam for all the panels is suitable for a plurality of panels having narrow intervals, i.e., suitable for intervals between the panels being equivalent to the wavelength. The use of the same beam for all the panels is not suitable for panels having wide intervals, i.e., not suitable for intervals between the panels being significantly larger than the wavelength. Reduction in beamforming gains due to an angle offset poses a problem.

As in the example of FIG. 12B, spatial multiplexing via polarizations (vertical polarization (H-Pol) and horizontal polarization (V-Pol)) can be applied up to rank 2 only in the LoS-dominant channel. Multiplexing using the second beam is also supported by the type 1 multi-panel, but is not suited for a LoS-dominant case.

Enhancement of the type 2 codebook in Rel. 18 supports mTRP coherent joint transmittion (CJT), but brings about extremely large feedback overhead.

In Rel-18 mTRP CJT CSI based on the enhanced type 2 codebook (Rel-16 type 2 CSI), mode 1 using an independent FD base for each TRP and mode 2 using a common/joint FD base for the mTRP are under study. These modes determine one common strongest coefficient indicator over the mTRP.

In PMI feedback, overhead of the Rel-18 mTRP CJT CSI is roughly $N_g$ times as large as overhead of type 2 single-panel CSI. The enhanced type 2 codebook reduces overhead of subband feedback, but overhead of wideband feedback remains.

A plurality of panels in the type 1 multi-panel codebook have narrow intervals, and are arranged toward the same direction. The interval between the panels is equivalent to the wavelength. Large-scale parameters of the plurality of panels in the type 1 multi-panel codebook are the same. Small-scale parameters of the plurality of panels in the type 1 multi-panel codebook are the same. The type 1 multi-panel codebook does not support LoS-MIMO, due to the codebook structure.

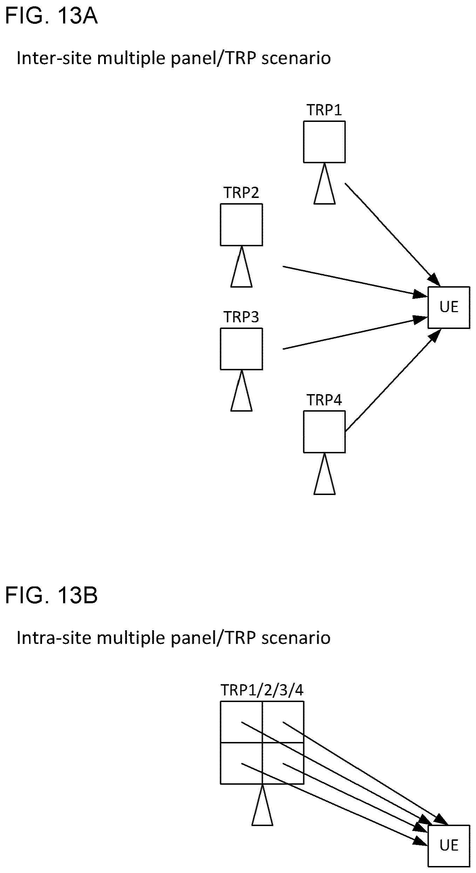

The mTRP CJT in Rel. 18 is divided into inter-site CJT (FIG. 13A) and intra-site CJT (FIG. 13B).

A plurality of panels in the enhanced type 2 codebook for the intra-site CJT are arranged at the same site, and are directed toward any direction. The large-scale parameters of the plurality of panels in the enhanced type 2 codebook for the intra-site CJT are the same. Of the small-scale parameters of the plurality of panels in the enhanced type 2 codebook for the intra-site CJT, a LoS path is the same, an array response is different, and a NLoS component is different. The enhanced type 2 codebook for the intra-site CJT supports LoS-MIMO.

In an existing scenario such as an outdoor BS and UE, smaller correlation than a plurality of channels can implement more ranks, but power of a plurality of streams is imbalanced, and a total data rate in the declared SNR deteriorates. LoS-MIMO improves the total data rate, and can thus achieve more balanced power.

The plurality of panels in the enhanced type 2 codebook for the inter-site CJT are arranged at any site location, and are directed toward any direction. The large-scale parameters of the plurality of panels in the enhanced type 2 codebook for the inter-site CJT have no correlation. The small-scale parameters of the plurality of panels in the enhanced type 2 codebook for the inter-site CJT have less correlation. The enhanced type 2 codebook for the inter-site CJT does not support LoS-MIMO, due to a channel without correlation.

In this manner, when existing codebooks are used for a plurality of panels having wide intervals, deterioration in communication performance, increase in overhead, and the like may be caused. For example, the type 1 multi-codebook cannot obtain sufficient communication performance for a plurality of panels having wide intervals. The enhanced type 2 codebook for the mTRP CJT has large overhead.

In view of this, the inventors of the present invention studied a codebook for a plurality of panels that enhance communication performance and reduce report overhead.

Embodiments according to the present disclosure will be described in detail with reference to the drawings as follows. Note that respective embodiments (for example, respective cases) below may each be employed individually, or at least two of the respective embodiments may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, the following abbreviations may be used.

- Azimuth angle of arrival: AOA
- Azimuth angle of departure: AOD
- Zenith angle of arrival: ZOA
- Zenith angle of departurel: ZOD
- Azimuth angle spread of arrival: ASA
- Azimuth angle spread of departure: ASD
- Zenith angle spread of arrival: ZSA
- Zenith angle spread of departure: ZSD

In the present disclosure, $a_b$, a_b, and a notation in which b is attached to a at the lower right may be interchangeably interpreted. In the present disclosure, $a^c$, a^c, and a notation in which c is attached to a at the upper right may be interchangeably interpreted. In the present disclosure, $a_b{}^c$, a_b^c, and a notation in which b is attached to a at the lower right and c is attached thereto at the upper right may be interchangeably interpreted. In the present disclosure, ceil(x) and a ceiling function may be interchangeably interpreted. In the present disclosure, floor(x) and a floor function may be interchangeably interpreted.

In the present disclosure, $x^\sim$ may be expressed by adding "~" above x, or may be referred to as x tilde. In the present disclosure, $x^-$ may be expressed by adding "-" above x, or may be referred to as x bar.

In the present disclosure, an SD beam, an SD DFT vector, a DFT vector indicating an SD beam, an SD base corresponding to a beam, an SD base index, a spatial response, and spatial characteristics may be interchangeably interpreted. In the present disclosure, an FD beam, an FD DFT vector, an FD base, an FD base index, a frequency response, and frequency characteristics may be interchangeably interpreted.

In the present disclosure, a panel, a TRP, a beam, and an SD beam may be interchangeably interpreted. In the present disclosure, a beam, an SD beam, a DFT vector, an SD DFT vector, and $v_{l,m}$ may be interchangeably interpreted. In the present disclosure, a beam, an SD beam, an SD base index corresponding to an SD beam, an SD beam index, and (l, m) may be interchangeably interpreted.

In the present disclosure, an enhanced codebook, enhancement of a type 1 multi-panel codebook, enhancement of a type 1 multi-panel codebook for LoS, an enhanced type 1 multi-panel codebook, enhancement of a type 2 codebook for LoS, enhancement of a type 2 codebook for mTRP CJT, and an enhanced type 2CJT codebook may be interchangeably interpreted.

In the present disclosure, a large-scale parameter, a large-scale property, and a large-scale channel property may be interchangeably interpreted.

In the present disclosure, the large-scale parameter may include at least one of a delay spread, a Doppler spread, a Doppler shift, an average gain, an average delay, a spatial Rx parameter, a delay spread (DS), an angle spread (ASA, ASD, ZSA, ZSD), a Rician K factor (K), shadow fading (SF), cross-correlation (coross-correlation), a state of LOS/NLOS, a path loss, and shadowing. In the present disclosure, the small-scale parameter may include at least one of a cluster delay, cluster power, an arrival angle using an azimuth angle and an elevation angle/zenith angle, a departure angle using an azimuth angle and an elevation angle/zenith angle, and a cross polarization power ratio.

(Radio Communication Method)

Even a plurality of LoS paths from a plurality of panels having wide intervals to the UE can be efficiently characterized, by being provided with correlation and necessary enhancement of the type 1 multi-panel codebook. To realize this, the following some primary technologies may be applied to a plurality of panels.

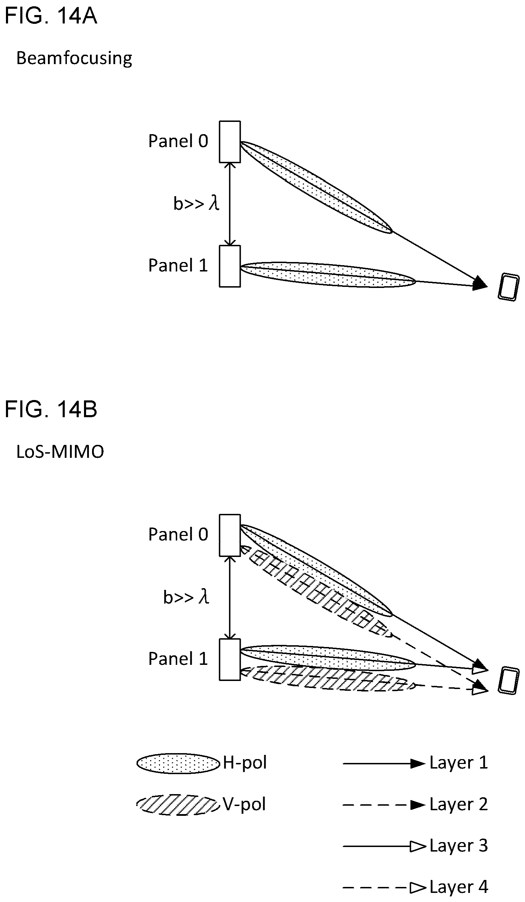

- Primary technology 1: Individual beam selection for the mTRP, which enables beamfocusing for SNR improvement. In the example of FIG. 14A, when different beams are selected in panels 0 and 1, beams from two panels are focused on the UE in the near-field.
- Primary technology 2: New codebook structure for a rank greater than 1, which enables LoS-MIMO for user throughput improvement.

In the example of FIG. 14B, four layers (ranks) in LoS are enabled by using a beam for each panel and two polarizations.

- Primary Technology 1

In the LoS case, an optimal beam direction of each panel can be adjusted to the LoS direction of the panel. In at least one of a case in which a plurality of panels have wide intervals and a case in which each panel has a narrow beam, the beam directions of the plurality of panels are different.

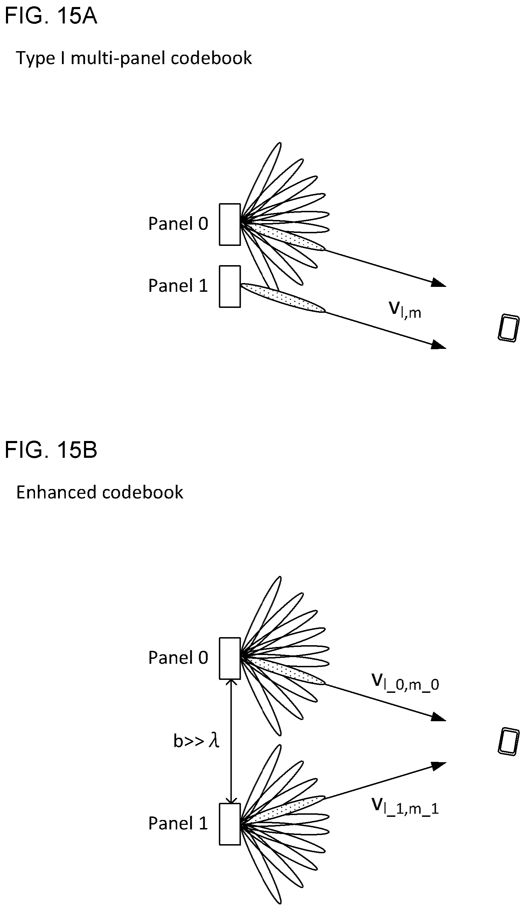

In the existing type 1 multi-panel codebook, $v_{l,m}$ indicates an over-sampled 2D-DFT vector (SD beam). In the example of FIG. 15A, in panels 0 and 1, the DFT vector $v_{l,m}$ indicating the same SD beam (same SD base indices $l$ and $m$) is selected. In the matrix for the existing type 1 multi-panel codebook, the DFT vectors of the plurality of panels are the same. The precoding matrix $W_{l,m,p,n}^{(1)}$ for the existing type 1 multi-panel codebook for one layer may be expressed by the following expression, using the SD beam $v_{l,m}$.

$$W_{l,m,p,n}^{(1)} = \frac{1}{\sqrt{P_{\text{CSI-RS}}}} \begin{bmatrix} v_{l,m} \\ \varphi_n v_{l,m} \\ \varphi_{p_1} v_{l,m} \\ \varphi_n \varphi_{p_1} v_{l,m} \\ \varphi_{p_2} v_{l,m} \\ \varphi_n \varphi_{p_2} v_{l,m} \\ \varphi_{p_3} v_{l,m} \\ \varphi_n \varphi_{p_3} v_{l,m} \end{bmatrix} \tag{K1}$$

For the enhanced type 1 multi-panel codebook for one layer for individual beam selection for a plurality of panels, FIG. 15B shows an example of two panels. In panel 0, the SD beam $v_{l\_0,m\_0}$ is selected, and in panel 1, the SD beam $v_{l\_1,m\_1}$ is selected. The precoding matrix $W_{l,m,p,n}^{(1)}$ for the enhanced type 1 multi-panel codebook for one layer of four panels may be expressed by the following expression, using the SD beams $v_{l\_0,m\_0}$, $v_{l\_1,m\_1}$, $v_{l\_2,m\_2}$, and $v_{l\_3,m\_3}$ respectively corresponding to panels 0, 1, 2, and 3.

$$W_{l,m,p,n}^{(1)} = \frac{1}{\sqrt{P_{\text{CSI-RS}}}} \begin{bmatrix} v_{l_0,m_0} \\ \varphi_n v_{l_0,m_0} \\ \varphi_{p_1} v_{l_1,m_1} \\ \varphi_n \varphi_{p_1} v_{l_1,m_1} \\ \varphi_{p_2} v_{l_2,m_2} \\ \varphi_n \varphi_{p_2} v_{l_2,m_2} \\ \varphi_{p_3} v_{l_3,m_3} \\ \varphi_n \varphi_{p_3} v_{l_3,m_3} \end{bmatrix}$$

$$(K2)$$

- Primary Technology 2

With an appropriate Tx/Rx aperture and an appropriate Tx-Rx distance being provided, a higher rank in the LoS case may be supported. When each panel includes a small number of antennas (having wide beams), the plurality of panels need not select different beams. Owing to enhancement of the codebook, improvement of single-user (SU) throughput and multi-user (MU) precoding can be transparently concatenated.

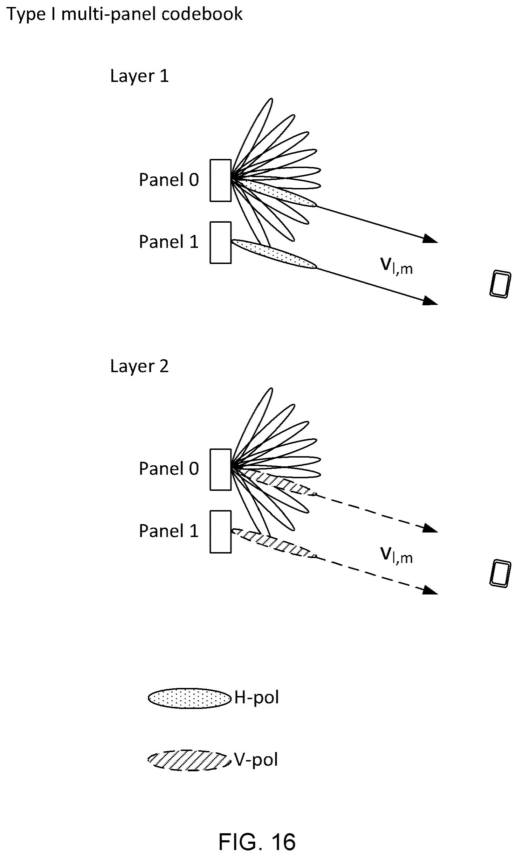

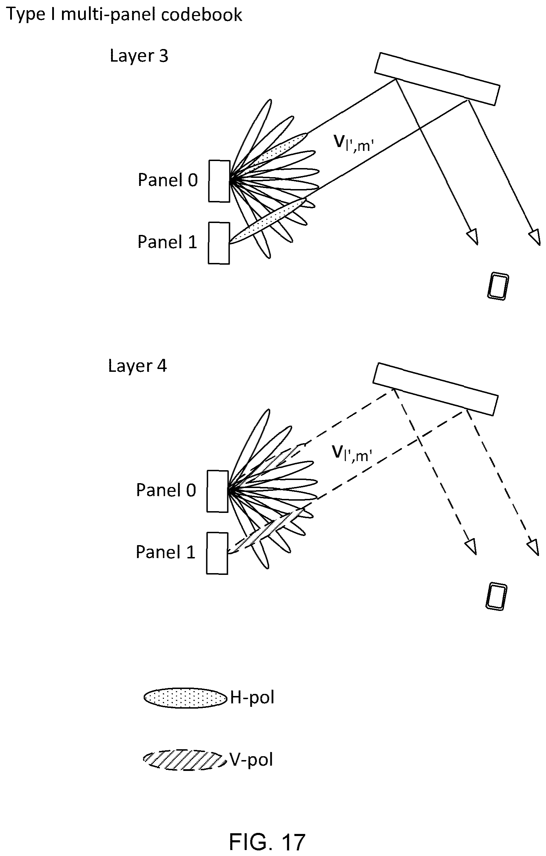

The existing type 1 multi-panel codebook uses one layer for each polarization for each path. The third and fourth layers may be multiplexed by using different paths (orthogonal beams), but this is not suited for LoS. In the examples of FIGS. 16 to 17, layer 1 is used for the first path and the horizontal polarization (H-pol), layer 2 is used for the first path and the vertical polarization (V-pol), layer 3 is used for the second path and the horizontal polarization, and layer 4 is used for the second path and the vertical polarization. The beams are the same between panels 0 and 1.

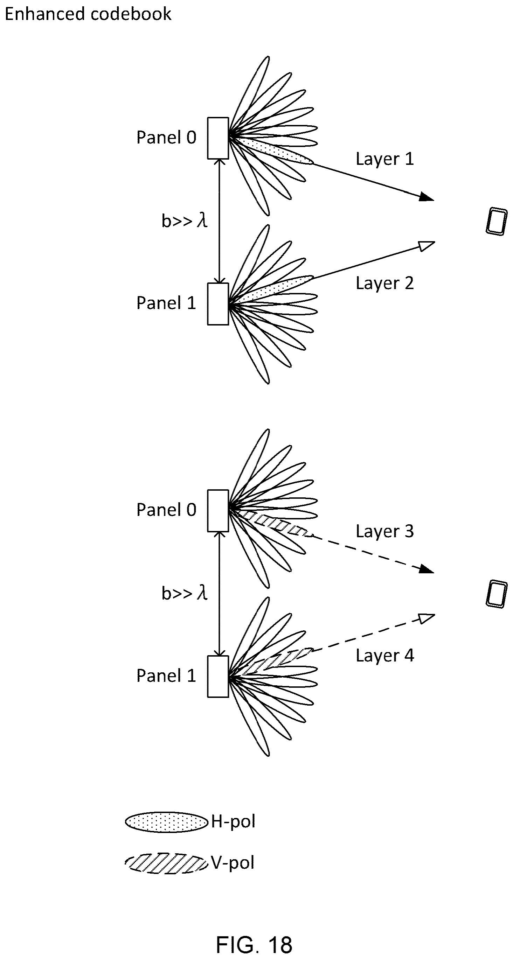

The enhanced type 1 multi-panel codebook can use more than one layer for each polarization for each path, and can be applied to LoS-MIMO. In the example of FIG. 18, layer 1 is used for panel 0 (first path) and the horizontal polarization, layer 2 is used for panel 0 (first path) and the vertical polarization, layer 3 is used for panel 1 (second path) and the horizontal polarization, and layer 4 is used for panel 1 (second path) and the vertical polarization. The beams are different between panels 0 and 1.

The enhanced type 1 multi-panel codebook based on primary technology 1/2 can enhance user throughput. According to one example of numerical value simulation, the user throughput of the enhanced type 1 multi-panel codebook is nearly the same as the user throughput of the type 2 codebook enhanced for the mTRP CJT, and is 1.26 times as high as the user throughput of the existing type 1 multi-panel codebook.

The enhanced type 1 multi-panel codebook based on primary technology 1/2 can reduce report overhead. According to one example of numerical value simulation, wideband PMI overhead of the enhanced type 1 multi-panel codebook is slightly higher (1.3 times) than the wideband PMI overhead of the existing type 1 multi-panel codebook, and is 11% to 25% of the wideband PMI overhead of the type 2 codebook enhanced for the mTRP CJT.

According to a ray-tracing channel and numerical value simulation, high user throughput and low feedback overhead can be achieved. The user throughput is nearly the same as the user throughput of the type 2 (for the mTRP CJT), and is approximately 1.23 times as high as the user throughput of the type 1 multi-panel. The wideband PMI overhead is slightly higher than the wideband PMI overhead of the type 1 multi-panel, and is 11% to 25% of the wideband PMI overhead of the type 2 (for the mTRP CJT).

The UE may receive a configuration of a report of channel state information (CSI) based on a type 1 multi-panel codebook. The UE may control transmission of the report based on measurement of a plurality of channel state information reference signals (CSI-RSs) from a plurality of panels, based on the configuration. The report may include a plurality of indices respectively corresponding to the plurality of panels (for example, a plurality of $(l_q, m_q)$). The plurality of indices may respectively correspond to a plurality of spatial domain bases.

The UE may receive a configuration of a report of channel state information (CSI) based on the type 2 codebook (for example, the type 2 codebook enhanced for the mTRP CJT). The UE may control transmission of the report based on measurement of a plurality of channel state information reference signals (CSI-RSs) from a plurality of panels (plurality of TRPs), based on the configuration. The report may include a plurality of indices respectively corresponding to the plurality of panels. The plurality of indices may respectively correspond to a plurality of spatial domain bases. One or more indices of the plurality of indices may correspond to one or more panels of the plurality of panels. The one or more indices may be selected from a part of a set (for example, a subset) of the spatial domain bases.

<Embodiment 1>

The present embodiment relates to the enhanced codebook. The enhanced codebook is obtained by applying at least one enhancement in the present embodiment to the existing codebook.

In the following description, a case in which the existing codebook is the type 1 multi-panel codebook will be mainly described. The enhanced codebook of this case may be referred to as an enhanced type 1 multi-panel codebook.

The existing codebook may be based on the type 2 codebook. For example, the existing codebook may be a codebook of type 2/enhanced type 2/type 2 port selection/enhanced type 2 port selection/further enhanced type 2 port selection, or may be a codebook for the Rel-18 mTRP CJT. The enhanced codebook of a case in which the existing codebook is based on the type 2 codebook may be referred to as an enhanced type 2CJT codebook, a further enhanced type 2 codebook, or the like.

<<Embodiment 1-1>>

Here, antenna modeling (antenna array structures) will be described.

Subarrays/multi-panel having large inter-subarray (inter-subarray)/inter-panel (inter-panel) intervals may be supported.

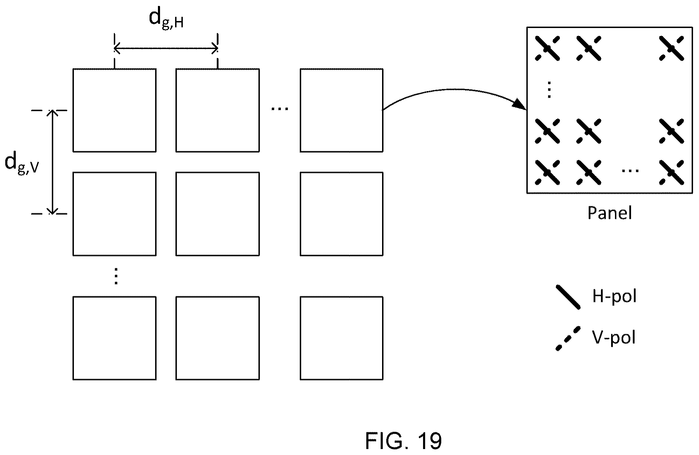

The enhanced codebook may support a multi-panel antenna array with $d_g \gg \lambda$ in the base station. $d_g$ may be an interval between panels, or may be an interval between centers of two adjacent panels. $\lambda$ may be a wavelength corresponding to a center frequency. In the example of FIG. 19, $d_g$ may be at least one of $d_{g,H}$ and $d_{g,V}$, or $d_g = d_{g,H} = d_{g,V}$ may hold.

If the UE is configured with a report of the PMI using the enhanced codebook, the large-scale property may be shared over $2N_gN_1N_2$ CSI-RS ports. At least one of $N_g$, $N_1$, and $N_2$ may be configured by the base station.

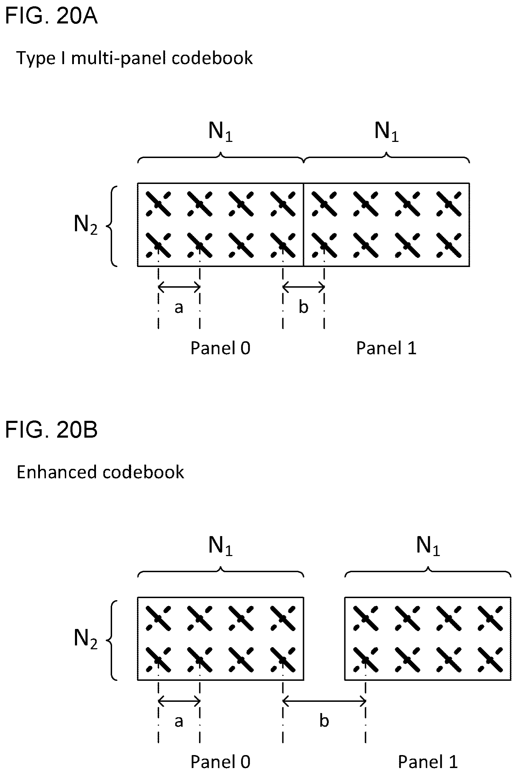

FIG. 20A shows an example of the antenna array structure in the existing codebook. When an intra-panel antenna interval is represented by a and an inter-panel antenna interval is represented by b, $b \approx a$ may hold.

FIG. 20B shows an example of the antenna array structure in the enhanced codebook. $b \gg \lambda$ may hold, or $b \gg a$ may hold.

<<Embodiment 1-2>>

Here, codebook structures for one, two, and four layers will be described.

- Codebook Structure for One Layer

The enhanced codebook for one layer (number v of layers = 1 and number of panels $N_g = 1, 2,...$) may indicate an SD beam for each panel. The SD beam $v_{l\_q,m\_q}$ for panel q may be represented by SD beam (SD base) indices $(l_q, m_q)$. When $N_g = 2$, as in the example of FIG. 15B described above, the SD beam $v_{l\_0,m\_0}$ for panel 0 may be represented by the SD beam indices $(l_0, m_0)$, or the SD beam $v_{l\_1,m\_1}$ for panel 1 may be represented by $(l_1, m_1)$. Feedback of the SD beam index may follow at least one of the following some alternatives.

-- Alternative 1

An independent SD beam index is reported for each panel. A panel index may be $q = 0, 1, ..., N_g - 1$. The SD beam index for panel q in the horizontal direction may be $l_q \in \{0, ..., N_1O_1 - 1\}$ (one SD beam index of a set of SD beam indices). The SD beam index for panel q in the vertical direction may be $m_q \in \{0, ..., N_2O_2 - 1\}$ (one SD beam index of a set of SD beam indices). In this case, the size of the report of the SD beam index may be $N_g\log_2(O_1N_1O_2N_2)$ bits. $N_g$ $(l_q, m_q)$ pairs similar to $(i_{1,1}, i_{1,2})$ in the existing type 1 multi-panel codebook may be reported.

The precoding matrix for $N_g = 2$ may include only a first row to a fourth row in $W_{l,m,p,n}^{(1)}$ of expression (K2). The precoding matrix for $N_g = 4$ may be $W_{l,m,p,n}^{(1)}$ of expression (K2).

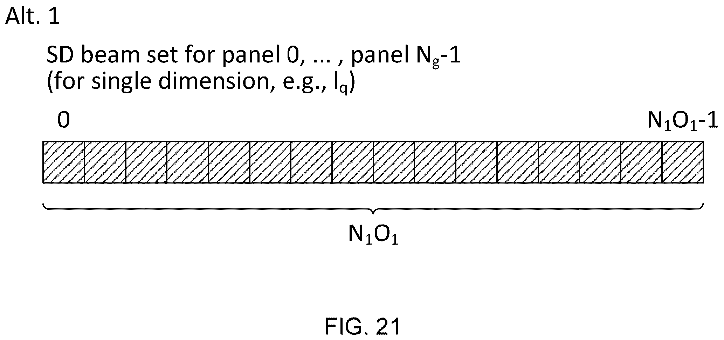

In the example of FIG. 21, the UE may select one SD beam index from a set of $N_1O_1$ SD beam indices as an SD beam for panel q $(q = 0, ..., N_g - 1)$ for a single dimension $l_q$, and report the one SD beam index.

-- Alternative 2

There is restriction on a SD beam subset over a plurality of panels. The SD beam index for panel 0 in the horizontal direction may be $l_0 \in \{0, ..., N_1O_1 - 1\}$. The SD beam index for panel 0 in the vertical direction may be $m_0 \in \{0, ..., N_2O_2 - 1\}$. The SD beam index for panel q in the horizontal direction may be $l_q \in S_l'$. The SD beam index for panel q in the vertical direction may be $m_q \in S_m'$. One pair of $(l_0, m_0)$ and $(N_g - 1)$ pairs of $(l_q, m_q)$ may be reported. When the plurality of panels have nearly the same direction, the SD beam subset may be narrowed down due to correlation in the LoS direction.

$S_l$' and $S_m$' may represent restricted SD beam subsets. $S_l$' and $S_m$' may follow at least one of the following some alternatives.

--- Alternative 2a: $S_l$' and $S_m$' may be configured by the base station by using parameters $M_1$ and $M_2$. $M_1$ and $M_2$ may be the same value, or may be different values.

$S_l$' $\in \{l_0 - M_1/2 + 1, ..., l_0, ..., l_0 + M_1/2\}$ and $S_m$' $\in \{m_0 - M_2/2 + 1, ..., m_0, ..., m_0 + M_2/2\}$ may hold. In other words, the center of the subset for $l_q$ may be $l_0$ and the number of indices included in the subset may be $M_1$, and the center of the subset for $m_q$ may be $m_0$ and the number of indices included in the subset may be $M_2$.

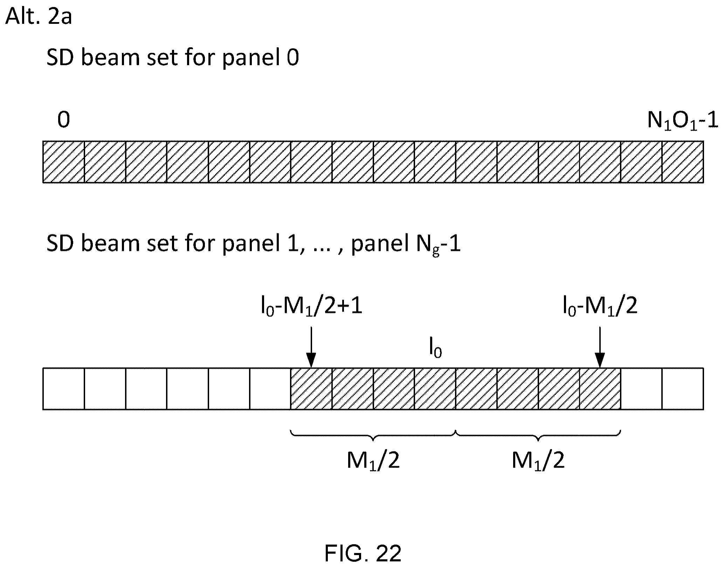

In the example of FIG. 22, the UE may select one SD beam index from a set of $N_1O_1$ SD beam indices as an SD beam for panel 0 for a single dimension $l_q$, and report the one SD beam index. Further, the UE may select one SD beam index from a subset of $M_1$ consecutive SD beam indices from $l_0 - M_1/2 + 1$ of the set of $N_1O_1$ SD beam indices as an SD beam for panel q (q = 1, ..., $N_g$ - 1), and report the one SD beam index.

$S_l$' $\in \{l_0 - M_1, ..., l_0, ..., l_0 + M_1\}$ and $S_m$' $\in \{m_0 - M_2, ..., m_0, ..., m_0 + M_2\}$ may hold. In other words, the center of the subset for $l_q$ may be $l_0$ and up to $M_1$ indices may be included in the subset from the center to respective positive and negative directions, and the center of the subset for $m_q$ may be $m_0$ and up to distance $M_2$ indices may be included in the subset from the center to respective positive and negative directions.

--- Alternative 2b: $S_l$' and $S_m$' may be configured by the base station by using parameters $l^-$, $M_1$, $m^-$, and $M_2$. $l^-$ and $m^-$ may be the same value, or may be different values. $M_1$ and $M_2$ may be the same value, or may be different values.

$S_1$' $\in \{l_0 - l^- + 1, ..., l_0 - l^- + M_1\}$ and $S_m$' $\in \{m_0 - m^- + 1, ..., m_0 - m^- + M_2\}$ may hold. In other words, a start position of the subset for $l_q$ may be $l_0 - l^- + 1$ and the number of indices included in the subset may be $M_1$, and a start position of the subset for $m_q$ may be $m_0 - m^- + 1$ and the number of indices included in the subset may be $M_2$.

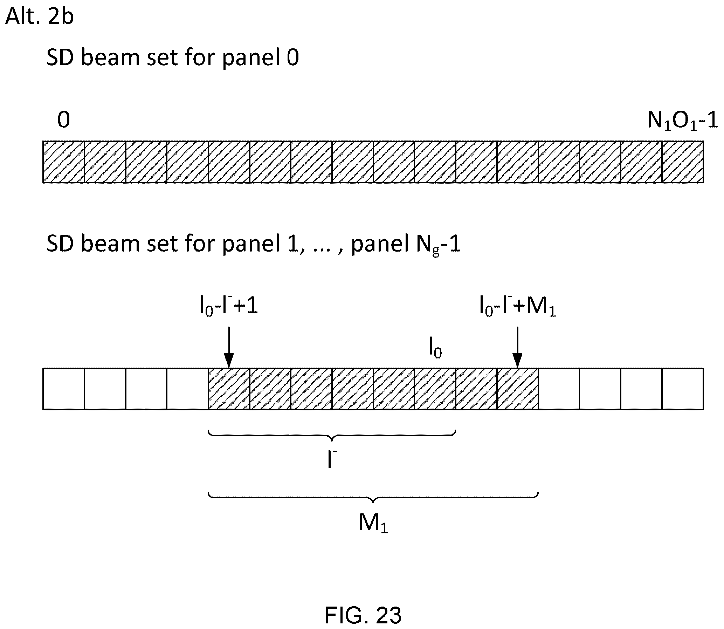

In the example of FIG. 23, the UE may select one SD beam index from a set of $N_1O_1$ SD beam indices as an SD beam for panel 0 for a single dimension $l_q$, and report the one SD beam index. Further, the UE may select one SD beam index from a subset of $M_1$ consecutive SD beam indices from $l_0 - l^- + 1$ of the set of $N_1O_1$ SD beam indices as an SD beam for panel q (q = 1, ..., $N_g$ - 1), and report the one SD beam index.

$S_1$' $\in \{l_0 - l^-, ..., l_0 - l^- + M_1 - 1\}$ and $S_m$' $\in \{m_0 - m^-, ..., m_0 - m^- + M_2 - 1\}$ may hold. In other words, a start position of the subset for $l_q$ may be $l_0 - l^-$ and the number of indices included in the subset may be $M_1$, and a start position of the subset for $m_q$ may be $m_0 - m^-$ and the number of indices included in the subset may be $M_2$.

--- Alternative 2c: $S_l$' and $S_m$' may be configured by the base station by using a bitmap parameter having a form of a bit sequence. The bit sequence may have a length $A_c = N_1O_1N_2O_2$, and may be $[b_{A_c-1}, ...b_1, b_0]$. A position of a given bit corresponds to $(l_q, m_q)$. Value 0 of the bit indicates that the pair of $(l_q, m_q)$ associated with the bit is not permitted to be reported. Value 1 of the bit indicates that the pair of $(l_q, m_q)$ associated with the bit is permitted to be reported.

In alternatives 2a and 2b, a UCI payload size may be determined according to $M_1$ and $M_2$. In alternative 2c, the UCI payload size may be determined according to the number of bits representing 1 in the bitmap parameter.

As will be described later, the same SD beam as the SD beam of layer 1 may be applied from layers 2 to 4.

The size (number of bits) of the SD beam index selected from the subset of SD beam indices may be reduced as compared to the size (number of bits) of the SD beam index selected from the set of SD beam indices. The number of SD beam indices in the subset may be half the number of SD beam indices in the set or less.

- Codebook Structure for Two Layers and Two Panels

The enhanced codebook for two layers and two panels (number v of layers = 2 and number of panels $N_g$ = 2) may follow at least one of the following some alternatives.

-- Alternative 1

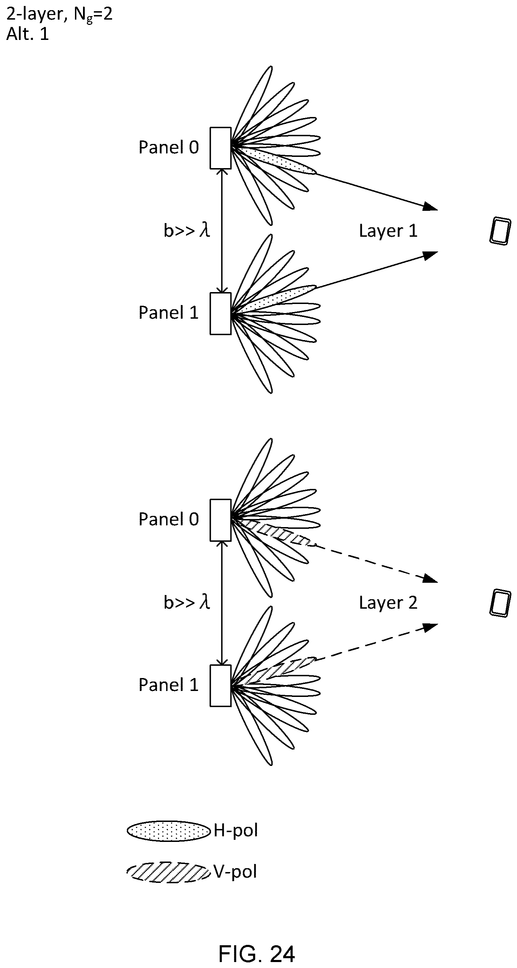

For the phase coefficient $\varphi_n$ (related to the polarizations), different signs {+1, -1} may be respectively associated with layer 1 = 1, 2. As in the example of FIG. 24, layer 1 = 1, 2 may be multiplexed by using polarizations (respectively using the horizontal polarization and the vertical polarization).

(In a case of $i_{1,3} = 0$,) the matrix $W_{l,m,p,n}^{(2)}$ for the type 1 multi-panel codebook for two layers and two panels may be given by the following expression.

$$W_{l,m,p,n}^{(2)} = \frac{1}{\sqrt{2P_{\text{CSI-RS}}}} \begin{bmatrix} v_{l_0,m_0} & v_{l_0,m_0} \\ \varphi_n v_{l_0,m_0} & -\varphi_n v_{l_0,m_0} \\ \varphi_{p_1} v_{l_1,m_1} & \varphi_{p_1} v_{l_1,m_1} \\ \varphi_n \varphi_{p_1} v_{l_1,m_1} & -\varphi_n \varphi_{p_1} v_{l_1,m_1} \end{bmatrix} \tag{K3}$$

-- Alternative 2

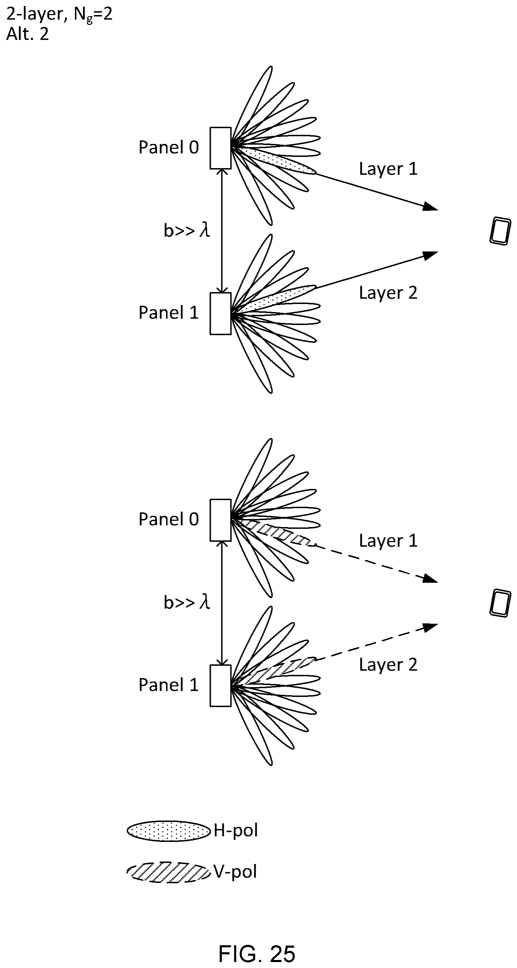

For the phase coefficient $\varphi_p$ ($p = p_1$) (related to the panels), different signs {+1, -1} may be respectively associated with layer 1 = 1, 2. As in the example of FIG. 25, panel q = 0, 1 may be multiplexed by using LoS-MIMO (respectively using different beams).

The matrix $W_{l,m,p,n}^{(2)}$ for the type 1 multi-panel codebook for two layers and two panels may be given by the following expression.

$$W_{l,m,p,n}^{(2)} = \frac{1}{\sqrt{2P_{\text{CSI-RS}}}} \begin{bmatrix} v_{l_0,m_0} & v_{l_0,m_0} \\ \varphi_n v_{l_0,m_0} & \varphi_n v_{l_0,m_0} \\ \varphi_{p_1} v_{l_1,m_1} & -\varphi_{p_1} v_{l_1,m_1} \\ \varphi_n \varphi_{p_1} v_{l_1,m_1} & -\varphi_n \varphi_{p_1} v_{l_1,m_1} \end{bmatrix} \tag{K4}$$

Alternative 1 uses two polarizations for multiplexing of two layers, and uses two panels for diversity gain. Alternative 2 uses two panels for multiplexing of two layers, and uses two polarizations for diversity gain. Alternative 2 requires an appropriate Tx/Rx antenna aperture and an appropriate Tx-Rx distance. Alternative 2 can be enhanced to a higher rank.

These two alternatives may follow at least one of the following some options.

    -- Option 1: Alternative 1 or 2 may be reported by the UE by using a binary quantity indicating the alternative, based on channel measurement.
    -- Option 2: Alternative 1 or 2 may be configured by the base station via RRC.

- Codebook Structure for Two Layers and Four Panels

The enhanced codebook for two layers and four panels (number v of layers = 2 and number of panels $N_g$ = 4) may follow at least one of the following some alternatives.

-- Alternative 1

For the phase coefficient $\varphi_n$, different signs {+1, -1} may be respectively associated with layer 1 = 1, 2. Similarly to alternative 1 for $N_g$ = 2, layer 1 = 1, 2 may be multiplexed by using polarizations (respectively using the horizontal polarization and the vertical polarization).

By enhancing matrix $W_{l,m,p,n}^{(2)}$ of alternative 1 for two layers and two panels, the matrix $W_{l,m,p,n}^{(2)}$ for the type 1 multi-panel codebook for two layers and four panels may be given by the following expression.

$$W_{l,m,p,n}^{(2)} = \frac{1}{\sqrt{2P_{\text{CSI-RS}}}} \begin{bmatrix} v_{l_0,m_0} & v_{l_0,m_0} \\ \varphi_n v_{l_0,m_0} & -\varphi_n v_{l_0,m_0} \\ \varphi_{p_1} v_{l_1,m_1} & \varphi_{p_1} v_{l_1,m_1} \\ \varphi_n \varphi_{p_1} v_{l_1,m_1} & -\varphi_n \varphi_{p_1} v_{l_1,m_1} \\ \varphi_{p_2} v_{l_2,m_2} & \varphi_{p_2} v_{l_2,m_2} \\ \varphi_n \varphi_{p_2} v_{l_2,m_2} & -\varphi_n \varphi_{p_2} v_{l_2,m_2} \\ \varphi_{p_3} v_{l_3,m_3} & \varphi_{p_3} v_{l_3,m_3} \\ \varphi_n \varphi_{p_3} v_{l_3,m_3} & -\varphi_n \varphi_{p_3} v_{l_3,m_3} \end{bmatrix}$$

$$(K5)$$

-- Alternative 2

For the phase coefficient $\varphi_p$, coefficients {+1, -1, +j, -j} may be associated with $p = p_1, p_2, p_3$ ($p = p_q$, q = 1, 2, 3) and layer 1 = 1, 2. Panel q = 0, 1, 2, 3 may be multiplexed by using LoS-MIMO (respectively using different beams).

With the matrix $W_{l,m,p,n}^{(2)}$ of alternative 2 for two layers and two panels being enhanced, the matrix $W_{l,m,p,n}^{(2)}$ for the type 1 multi-panel codebook for two layers and four panels may be given by the following expression.

$$W_{l,m,p,n}^{(2)} = \frac{1}{\sqrt{2P_{\text{CSI-RS}}}} W_1 W_2$$

$$W_1 = \begin{bmatrix} v_{l_0,m_0} & & & \\ \varphi_n v_{l_0,m_0} & & & \\ & \varphi_{p_1} v_{l_1,m_1} & & \\ & \varphi_n \varphi_{p_1} v_{l_1,m_1} & & \\ & & \varphi_{p_2} v_{l_2,m_2} & \\ & & \varphi_n \varphi_{p_2} v_{l_2,m_2} & \\ & & & \varphi_{p_3} v_{l_3,m_3} \\ & & & \varphi_n \varphi_{p_3} v_{l_3,m_3} \end{bmatrix}$$

Alt. 2a: $W_2 = \begin{bmatrix} 1 & 1 \\ 1 & -1 \\ 1 & 1 \\ 1 & -1 \end{bmatrix}$

Alt. 2b: $W_2 = \begin{bmatrix} 1 & 1 \\ 1 & j \\ 1 & -1 \\ 1 & -j \end{bmatrix}$

Alt. 2c: $W_2 = \begin{bmatrix} 1 & 1 \\ 1 & -j \\ 1 & -1 \\ 1 & j \end{bmatrix}$

$$(K6)$$

Here, the coefficient $W_2$ may follow any one of alternatives 2a to 2c.

Alternatives 2a to 2c may represent different two-dimensional partial spaces of a column space of the matrix $W_1$, and may be selected by the UE according to an antenna aperture and a channel. Similarly, the matrix $W_{l,m,p,n}^{(2)}$ may be enhanced to any $N_g$.

These four alternatives may follow at least one of the following some options.

   -- Option 1: One of alternatives 1, 2a, 2b, and 2c may be reported by the UE by using a 2-bit quantity indicating the alternative, based on channel measurement.

   -- Option 2: One of alternatives 1, 2a, 2b, and 2c may be configured by the base station via RRC, or may be determined by a combination of an RRC configuration and a UE report of up to 2 bits indicating one of the alternatives.

- Codebook Structure for Four Layers and Two Panels

In the enhanced codebook for four layers and two panels (number $v$ of layers = 4 and number of panels $N_g$ = 2), for the phase coefficients $\varphi_n$ and $\varphi_p$, coefficients {+1, -1, +j, -j} may be associated with layer $l$ = 1, 2, 3, 4. Two layers may be multiplexed via two polarizations, and two layers may be multiplexed via LoS-MIMO.

The matrix $W_{l,m,p,n}^{(4)}$ for the type 1 multi-panel codebook for four layers and two panels may be given by the following expression.

$$W_{l,m,p,n}^{(4)} =$$

$$\frac{1}{\sqrt{4P_{\text{CSI-RS}}}} \begin{bmatrix} v_{l_0,m_0} & v_{l_0,m_0} & v_{l_0,m_0} & v_{l_0,m_0} \\ \varphi_n v_{l_0,m_0} & -j\varphi_n v_{l_0,m_0} & -\varphi_n v_{l_0,m_0} & j\varphi_n v_{l_0,m_0} \\ \varphi_{p_1} v_{l_1,m_1} & -\varphi_{p_1} v_{l_1,m_1} & \varphi_{p_1} v_{l_1,m_1} & -\varphi_{p_1} v_{l_1,m_1} \\ \varphi_n \varphi_{p_1} v_{l_1,m_1} & j\varphi_n \varphi_{p_1} v_{l_1,m_1} & -\varphi_n \varphi_{p_1} v_{l_1,m_1} & -j\varphi_n \varphi_{p_1} v_{l_1,m_1} \end{bmatrix}$$

$$(K7)$$

As in the example of FIG. 18 described above, layers 1 and 3 may use the horizontal polarization, and layers 2 and 4 may use the horizontal polarization. Layers 1 and 2 may use beams of panel 0, and layers 3 and 4 may use beams of panel 1.

- Codebook Structure for Four Layers and Four Panels

In the enhanced codebook for four layers and four panels (number $v$ of layers = 4 and number of panels $N_g$ = 4), for the phase coefficients $\varphi_n$ and $\varphi_p$, coefficients {+1, -1, +j, -j} may be associated with panel $p$ = $p_1$, $p_2$, $p_3$ ($p$ = $p_q$, q = 1, 2, 3) and layer $l$ = 1, 2, 3, 4.

The matrix $W_{l,m,p,n}^{(4)}$ for the type 1 multi-panel codebook for four layers and four panels may be given by the following expression.

$$W_{l,m,p,n}^{(4)} = \frac{1}{\sqrt{4P_{\text{CSI-RS}}}} W_1 W_2$$

$$W_1 = \begin{bmatrix} W_{10} & \\ & W_{11} \end{bmatrix}$$

$$W_{10} = \begin{bmatrix} v_{l_0,m_0} & & & \\ & \varphi_n v_{l_0,m_0} & & \\ & & \varphi_{p_1} v_{l_1,m_1} & \\ & & & \varphi_n \varphi_{p_1} v_{l_1,m_1} \end{bmatrix}$$

$$W_{11} = \begin{bmatrix} \varphi_{p_2} v_{l_2,m_2} & & & \\ & \varphi_n \varphi_{p_2} v_{l_2,m_2} & & \\ & & \varphi_{p_3} v_{l_3,m_3} & \\ & & & \varphi_n \varphi_{p_3} v_{l_3,m_3} \end{bmatrix}$$

Alt. 1a: $W_2 = \begin{bmatrix} 1 & 1 \\ 1 & -1 \\ 1 & 1 \\ 1 & -1 \end{bmatrix} \otimes \begin{bmatrix} 1 & 1 \\ 1 & -1 \end{bmatrix}$

Alt. 1b: $W_2 = \begin{bmatrix} 1 & 1 \\ 1 & j \\ 1 & -1 \\ 1 & -j \end{bmatrix} \otimes \begin{bmatrix} 1 & 1 \\ 1 & -1 \end{bmatrix}$

Alt. 1c: $W_2 = \begin{bmatrix} 1 & 1 \\ 1 & -j \\ 1 & -1 \\ 1 & j \end{bmatrix} \otimes \begin{bmatrix} 1 & 1 \\ 1 & -1 \end{bmatrix}$

Alt. 2: $W_2 = \begin{bmatrix} 1 & 1 & 1 & 1 \\ 1 & -j & -1 & j \\ 1 & -1 & 1 & -1 \\ 1 & j & -1 & -j \end{bmatrix} \otimes \begin{bmatrix} 1 & 1 \\ 1 & -1 \end{bmatrix}$

(K8)

Here, the coefficient $W_2$ may follow any one of alternatives 1a, 1b, 1c, and 2 of the following expression.

Alternatives 1a to 1c may multiplex two layers via two polarizations, and may multiplex two layers via LoS-MIMO. Alternative 2 may multiplex four layers via LoS-MIMO.

These four alternatives may follow at least one of the following some options.

-- Option 1: One of alternatives 1a, 1b, 1c, and 2 may be reported by the UE by using a 2-bit quantity indicating the alternative, based on channel measurement.
-- Option 2: One of alternatives 1a, 1b, 1c, and 2 may be configured by the base station via RRC, or may be determined by a combination of an RRC configuration and a report of up to 2 bits indicating one of lower alternatives from the UE if necessary.

<<Embodiment 1-3>>

Here, codebook structures for three, five, six, seven, and eight layers will be described.

- Codebook Structure for Three Layers

The matrix $W_{l,m,p,n}^{(3)}$ for the enhanced codebook for three layers may be a partial space of rank 3 from the matrix

$W_{l,m,p,n}^{(4)}$ for four layers described above. For example, the matrix $W_{l,m,p,n}^{(3)}$ for three layers and two panels ($N_g = 2$) may select a first column to a third column from the matrix $W_{l,m,p,n}^{(4)}$ for four layers and two panels expressed by expression (K7) described above.

The matrix $W_{l,m,p,n}^{(3)}$ for three layers may be another matrix. The matrix may be obtained by randomly selecting a partial space of rank 3 from the matrix for four layers.

- Codebook Structure for Five, Six, Seven, and Eight Layers

The enhanced codebook for five, six, seven, and eight layers and four panels (number v of layers = 5, 6, 7, 8 and number of panels $N_g = 4$) may be supported. The matrix for five, six, seven, and eight layers and four panels may be generated by changing the design of the matrix $W_2$ in the matrix for four layers and four panels described above. For example, the matrix $W_{l,m,p,n}^{(r)}$ for r layers and four panels may be given by the following expression.

$$W_{l,m,p,n}^{(r)} = \frac{1}{\sqrt{r \cdot P_{\text{CSI-RS}}}} W_1 W_2$$

$$(K9)$$

Here, the matrix $W_1$ may be the same matrix as the diagonal matrix $W_1$ having eight rows and eight columns in the matrix $W_{l,m,p,n}^{(4)}$ for four layers and four panels. The matrix $W_2$ may be a rank-r partial space of a column space of the matrix $W_1$.

According to the codebook structure, a feedback parameter/index/quantity and configuration may be enhanced.

<<Embodiment 1-4>>

Here, a subband PMI will be described.

For the subband PMI, the enhanced codebook may follow at least one of the following some alternatives.

-- Alternative 1

The enhanced codebook may support only wideband PMI feedback. In a strong LoS channel, frequency selectivity of the channel may be low, and subband PMI feedback may be optional.

-- Alternative 2

The enhanced codebook may support both of the wideband PMI feedback and the subband PMI feedback. Designs of the wideband PMI feedback and the subband PMI feedback in the existing type 1 multi-panel codebook may be reused/repurposed for the enhanced codebook. A mode for performing at least one of the wideband PMI feedback and the subband PMI feedback may be configured by the base station via RRC.

<<Comparison between Existing Codebook and Enhanced Codebook>>

The existing type 1 multi-panel codebook includes $i_{1,1} \in \{0, ..., N_1O_1 - 1\}$ and $i_{1,2} \in \{0, ..., N_2O_2 - 1\}$ as parameters for the SD beam indices (wideband) of layer 1, and includes the same $i_{1,1}$ and $i_{1,2}$ as layer 1 and $i_{1,3} \in \{0, 1, 2, 3\}$ as parameters for SD beam indices (wideband) of layers 2 to 4. The SD beam indices of layer 1 define beams common to all the panels. $i_{1,3}$ for the SD beam indices for layers 2 to 4 define second beams common to all the panels for spatial multiplexing.

The enhanced codebook for alternative 1 may include $l_q \in \{0, ..., N_1O_1 - 1\}$ and $m_q \in \{0, ..., N_2O_2 - 1\}$ as parameters for the SD beam indices (wideband) of layer 1. Here, $q = 0, ..., N_g - 1$. The parameters are $N_g$ pairs of $(l_q, m_q)$.

The enhanced codebook for alternative 2 may include $l_0 \in \{0, ..., N_1O_1 - 1\}$, $m_0 \in \{0, ..., N_2O_2 - 1\}$, and $l_q \in S_l'$, $m_q \in S_m'$ as parameters for the SD beam indices (wideband) of layer 1. Here, $q = 0, ..., N_g - 1$. The parameters are one pair of $(l_0, m_0)$ and $(N_g - 1)$ pairs of $(l_q, m_q)$ from the restricted SD beam subset determined by $S_l'$ and $S_m'$.

The enhanced codebook may include the same parameters as layer 1 as parameters for the SD beam indices (wideband) of layers 2 to 4 (the parameters for the second SD beam set are unnecessary). Multiplexing is performed on the plurality of same SD beams (LoS-MIMO design).

As parameters (wideband/subband) for the phase difference (co-phasing) over a plurality of panels and a plurality of polarizations, the existing type 1 multi-panel codebook includes $\varphi_n$, $\varphi_{p\_1}$, $\varphi_{p\_2}$, and $\varphi_{p\_3}$ in codebook mode 1, includes $\varphi_{n\_0}$, $\varphi_{p\_1}$, $\varphi_{p\_2}$, $\varphi_{n\_1}$, and $\varphi_{n\_2}$ in codebook mode 2, and does not include parameters for the phase difference over a plurality of layers. The sign of the second polarization in layers 2 to 4 follows a fixed rule.

The enhanced codebook for alternative 1 may include parameters of only the wideband as parameters for the phase difference over a plurality of panels and a plurality of polarizations.

As parameters for the phase difference over a plurality of panels and a plurality of polarizations, the enhanced codebook for alternative 2 may reuse/repurpose the design of the existing type 1 multi-panel codebook for the subband.

As parameters for the phase difference over a plurality of layers, the enhanced codebook for option 1 may include new parameters of 0 to 2 bits (for up to four layers). The parameters may indicate different alternatives according to the number of panels and the rank.

For the enhanced codebook for option 2, the alternatives of the parameters for the phase difference over a plurality of layers may be configured by the base station via RRC, or may be determined by an RRC configuration and a report indicating lower alternatives from the UE if necessary.

In the enhanced codebook, to enable LoS-MIMO, an inter-layer phase difference may be reported by the UE based on channel measurement (option 1), or may be (partially) configured by the base station (option 2). Option 1 does not require information on the base station side in advance such as array arrangement and a UE direction.

<<Embodiment 1-5>>

In a scenario of strong LoS in FR2, the Rel-18 mTRP CJT CSI may be enhanced to reduce PMI feedback overhead. To reduce the PMI feedback overhead, the number of indices/number of candidates indicating the SD/FD may be reduced.

To support cooperation between a plurality of TRPs, significant PMI feedback overhead may be required. In other words, the overhead may be several times as high as normal overhead of the codebook of the enhanced type 2 of Rel. 16. In FR2 where a LoS-dominant channel is expected, by narrowing down spatial correlation between a plurality of TRPs/panels, the PMI feedback overhead can be reduced.

Reduction in the number of indices of the SD/FD was studied. Because LoS is dominant, an impulse response of the LoS channel allows for reduction in the number of SD-FD beam pairs, and allows for reduction in the number of reported non-zero linear combination coefficients. LoS-MIMO is an extreme case in which there is a single SD-FD beam pair for each TRP for all the layers.

When the existing codebook is based on the type 2 codebook, by applying alternative 2 of Embodiment 1-2, the enhanced codebook may be obtained. The existing codebook may be the type 2 codebook (further enhanced type 2 codebook) enhanced for the mTRP CJT. The panel may be interpreted as the TRP.

In the enhanced type 2 codebook, indices for a plurality of SD beams selected for a plurality of panels/TRPs may be used. For example, in the further enhanced type 2 codebook, index $i_q$ indicating one SD beam of $L_q$ SD beams selected for index q of the panel/TRP may be used. SD beam (SD base) index $l_q$ in alternative 2 of Embodiment 1-2 may be interpreted as $m_1^{(i\_q)}$ in the further enhanced type 2 codebook, and the SD beam (SD base) index $m_q$ in alternative 2 of Embodiment 1-2 may be interpreted as $m_2^{(i\_q)}$ in the further enhanced type 2 codebook. In the further enhanced type 2 codebook, the subset of the SD beam indices may be common to a plurality of panels, or may be common to a plurality of SD beams in one panel.

According to the present embodiment, with the existing codebook being enhanced, the UE/base station can use an appropriate enhanced codebook. Particularly, the UE/base station can use an appropriate enhanced codebook for a LoS-MIMO environment.

<Embodiment 2>

The present embodiment relates to an RRC configuration/UE capability for the enhanced codebook.

<<Embodiment 2-1>>

Configurations by RRC parameters such as a new mode of CSI measurement/report, RI restriction, CMR, and a codebook subset of each embodiment may be introduced. Some of the configurations may be updated by a MAC CE/DCI.

An RRC parameter for the new mode, for example, a parameter (enh-typeI-MultiPanel) indicating the enhanced type 1 multi-panel codebook, may be introduced.

Many configurations used in the parameter (typeI-MultiPanel) indicating the existing type 1 multi-panel codebook may be reused/repurposed for the new mode. For example, the number of panels (nrofPanels, $N_g$) and the codebook mode (codebookMode) in typeI-MultiPanel may be reused for the new mode.

The RI restriction (ri-Restriction) in enh-typeI-MultiPanel may be separated from ri-Restriction in typeI-Multi-

Panel, or may be different therefrom. The maximum supported rank may be associated with the number of configured panels. For example, the maximum rank for $N_g = 2$ may be 4, and the maximum rank for $N_g = 4$ may be 8.

The CMR configuration may follow at least one of the following some options.

- Option 1: One CSI-RS resource can be configured, and the number of ports is $2N_gN_1N_2$.
- Option 2: $N_g$ CSI-RS resources can be configured, and the number of ports for each CSI-RS resource is $2N_1N_2$. In this case, $N_g$ CSI-RS resources may be configured in the same or consecutive X DL slots without DL/UL switch and in the same discontinuous reception (DRX) active time.

(In case of option 1 or 2 of the CMR configuration,) the codebook subset restriction may be configured for each CSI-RS resource, and (in a case of option 2 of the CMR configuration,) it may be configured common to $N_g$ CSI-RS resources.

<<Embodiment 2-2>>

UE capability for each embodiment may be defined, and the UE may report corresponding UE capability signaling.

The UE capability may include at least one of the following some pieces of information.

- Support of the new mode.
- Support of at least one of $N_g$, $N_1$, $N_2$, the maximum RI, the number of CSI-RS ports, and the number of CSI-RSs for the new mode.
- Codebook subset restriction.

According to the present embodiment, the enhanced codebook can be appropriately configured.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- Support of specific processing/operation/control/information for at least one of embodiments above

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of the operations of the above-described embodiments, any RRC parameter for specific release (for example, Rel. 18/19), or the like.

When not supporting at least one of the specific UE capabilities or not configured with the specific information, the UE may apply operation of Rel. 15/16, for example.

(Supplementary Note)

Regarding one embodiment of the present disclosure, the following supplementary notes of the invention will be given.

{Supplementary Note 1}

A terminal including:

a receiving section that receives a configuration of a report of channel state information (CSI) based on a type 1 multi-panel codebook; and
a control section that controls transmission of the report based on measurement of a plurality of channel state information reference signals (CSI-RSs) from a plurality of panels, based on the configuration, wherein
the report includes a plurality of indices respectively corresponding to the plurality of panels, and
the plurality of indices respectively correspond to a plurality of spatial domain bases.

{Supplementary Note 2}

The terminal according to supplementary note 1, wherein the plurality of spatial domain bases respectively indicate a plurality of beams.

{Supplementary Note 3}

The terminal according to supplementary note 1 or 2, wherein the plurality of indices are selected from a set of the spatial domain bases.

{Supplementary Note 4}

The terminal according to any one of supplementary notes 1 to 3, wherein

one or more indices of the plurality of indices correspond to one or more panels of the plurality of panels, and
the one or more indices are selected from a part of a set of the spatial domain bases.

(Supplementary Note)

Regarding one embodiment of the present disclosure, the following supplementary notes of the invention will be given.

{Supplementary Note 1}

A terminal including:

a receiving section that receives a configuration of a report of channel state information (CSI) based on a type 2 codebook; and
a control section that controls transmission of the report based on measurement of a plurality of channel state information reference signals (CSI-RSs) from a plurality of panels, based on the configuration, wherein
the report includes a plurality of indices respectively corresponding to the plurality of panels,
the plurality of indices respectively correspond to a plurality of spatial domain bases,
one or more indices of the plurality of indices correspond to one or more panels of the plurality of panels, and
the one or more indices are selected from a part of a set of the spatial domain bases.

{Supplementary Note 2}

The terminal according to supplementary note 1, wherein the plurality of spatial domain bases respectively indicate a plurality of beams.

{Supplementary Note 3}

The terminal according to supplementary note 1 or 2, wherein the plurality of panels are used for coherent joint transmission (CJT).

{Supplementary Note 4}

The terminal according to any one of supplementary notes 1 to 3, wherein one index of the plurality of indices is selected from the set.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

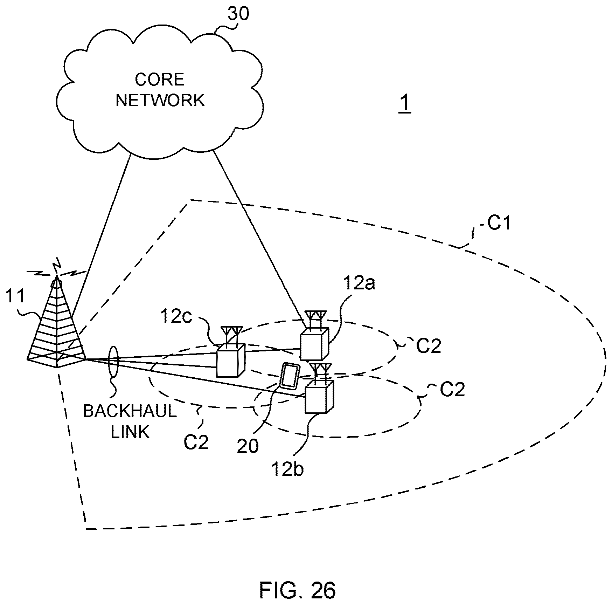

FIG. 26 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

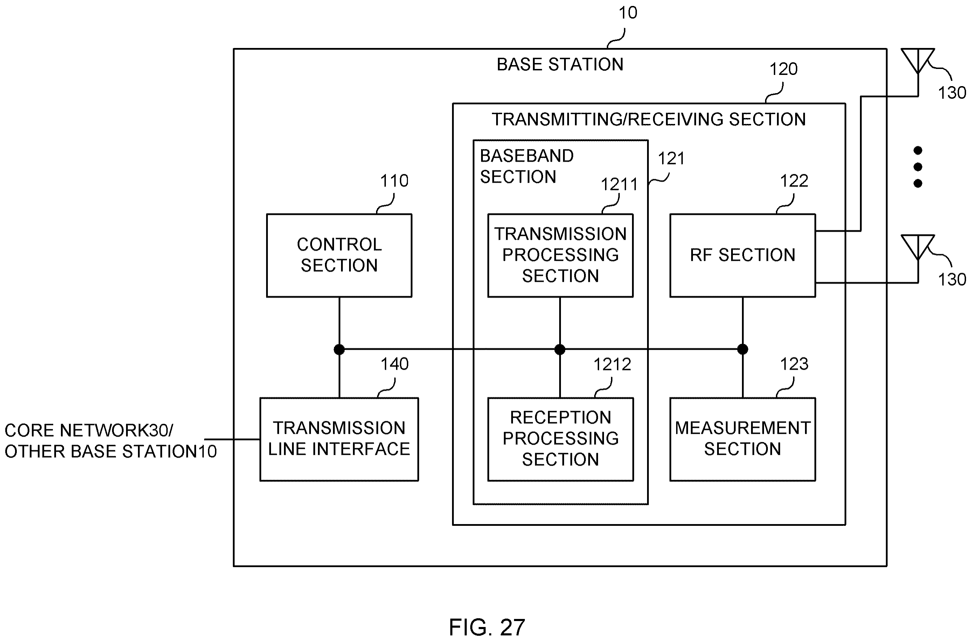

FIG. 27 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beamforming (for example, precoding), analog beamforming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a configuration of a report of channel state information (CSI) based on a type 1 multi-panel codebook. The control section 110 may control reception of the report based on measurement of a plurality of channel state information reference signals (CSI-RSs) from a plurality of panels, based on the configuration. The report may include a plurality of indices respectively corresponding to the plurality of panels. The plurality of indices may respectively correspond to a plurality of spatial domain bases.

Note that the transmitting/receiving section 120 may transmit a configuration of a report of channel state information (CSI) based on a type 2 codebook. The control section 110 may control reception of the report based on measurement of a plurality of channel state information reference signals (CSI-RSs) from a plurality of panels, based on the configuration. The report may include a plurality of indices respectively corresponding to the plurality of panels. The plurality of indices may respectively correspond to a plurality of spatial domain bases. One or more indices of the plurality of indices may correspond to one or more panels of the plurality of panels. The one or more indices may be selected from a part of a set of the spatial domain bases.

(User Terminal)

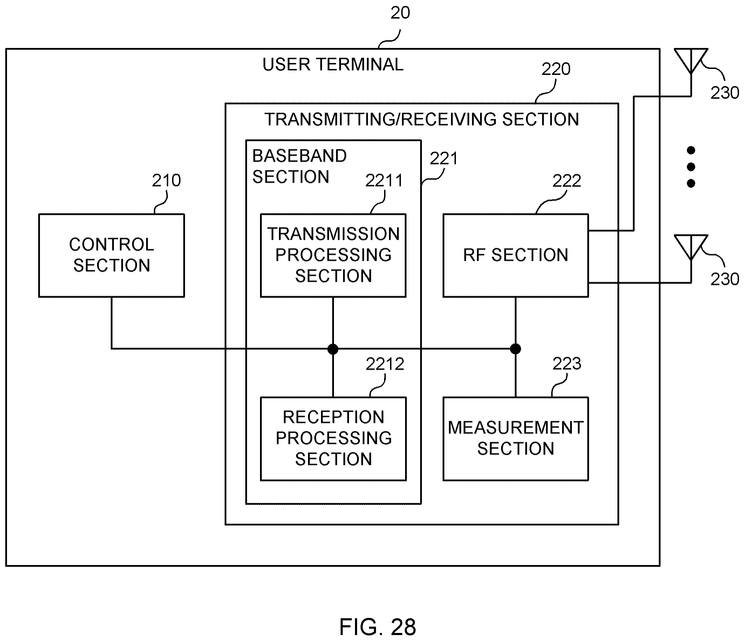

FIG. 28 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beamforming (for example, precoding), analog beamforming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure received power (for example, RSRP), received quality (for example, RSRQ, SINR, SNR), signal strength (for example, RSSI), channel information (for example, CSI), or the like. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a configuration of a report of channel state information (CSI) based on a type 1 multi-panel codebook. The control section 210 may control transmission of the report based on measurement of a plurality of channel state information reference signals (CSI-RSs) from a plurality of panels, based on the configuration. The report may include a plurality of indices respectively corresponding to the plurality of panels. The plurality of indices may respectively correspond to a plurality of spatial domain bases.

The plurality of spatial domain bases may respectively indicate a plurality of beams.

The plurality of indices may be selected from a set of the spatial domain bases.

One or more indices of the plurality of indices may correspond to one or more panels of the plurality of panels. The one or more indices may be selected from a part of a set of the spatial domain bases.

Note that the transmitting/receiving section 220 may receive a configuration of a report of channel state information (CSI) based on a type 2 codebook. The control section 210 may control transmission of the report based on measurement of a plurality of channel state information reference signals (CSI-RSs) from a plurality of panels, based on the configuration. The report may include a plurality of indices respectively corresponding to the plurality of panels. The plurality of indices may respectively correspond to a plurality of spatial domain bases. One or more indices of the plurality of indices may correspond to one or more panels of the plurality of panels. The one or more indices may be selected from a part of a set of the spatial domain bases.

The plurality of spatial domain bases may respectively indicate a plurality of beams.

The plurality of panels may be used for coherent joint transmission (CJT).

One index of the plurality of indices may be selected from the set.


(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

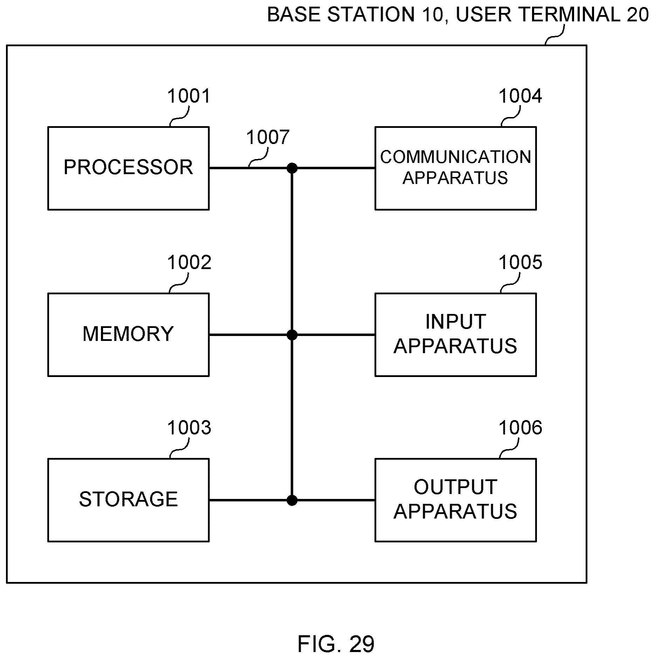

For example, a base station, a user terminal, and so on according to one embodiment of the present disclosure may function as a computer that executes the processes of the radio communication method of the present disclosure. FIG. 29 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

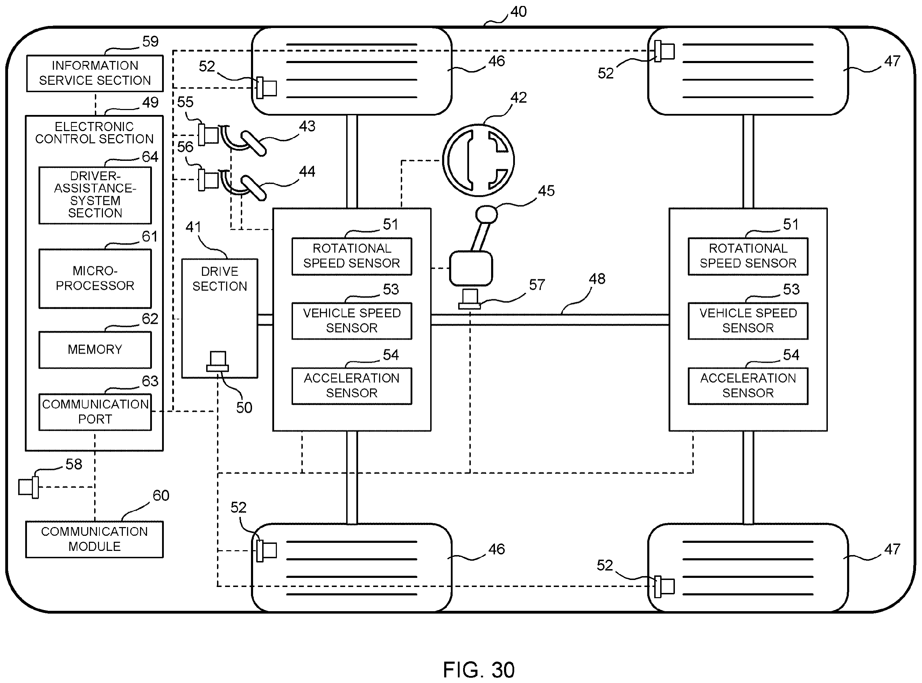

FIG. 30 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1. A terminal comprising:

   a receiving section that receives a configuration of a report of channel state information (CSI) based on a type 1 multi-panel codebook; and
   a control section that controls transmission of the report based on measurement of a plurality of channel state information reference signals (CSI-RSs) from a plurality of panels, based on the configuration, wherein
   the report includes a plurality of indices respectively corresponding to the plurality of panels, and
   the plurality of indices respectively correspond to a plurality of spatial domain bases.

2. The terminal according to claim 1, wherein
   the plurality of spatial domain bases respectively indicate a plurality of beams.

3. The terminal according to claim 1, wherein
   the plurality of indices are selected from a set of the spatial domain bases.

4. The terminal according to claim 1, wherein

   one or more indices of the plurality of indices correspond to one or more panels of the plurality of panels, and
   the one or more indices are selected from a part of a set of the spatial domain bases.

5. A radio communication method for a terminal, the radio communication method comprising:

receiving a configuration of a report of channel state information (CSI) based on a type 1 multi-panel codebook; and

controlling transmission of the report based on measurement of a plurality of channel state information reference signals (CSI-RSs) from a plurality of panels, based on the configuration, wherein

the report includes a plurality of indices respectively corresponding to the plurality of panels, and

the plurality of indices respectively correspond to a plurality of spatial domain bases.

6. A base station comprising:

a transmitting section that transmits a configuration of a report of channel state information (CSI) based on a type 1 multi-panel codebook; and

a control section that controls reception of the report based on measurement of a plurality of channel state information reference signals (CSI-RSs) from a plurality of panels, based on the configuration, wherein

the report includes a plurality of indices respectively corresponding to the plurality of panels, and

the plurality of indices respectively correspond to a plurality of spatial domain bases.

Mapping of elements of $i_{2,3,l}$: $k_{l,p}^{(1)}$ to $p_{l,p}^{(1)}$

| $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ |
|---|---|---|---|---|---|---|---|
| 0 | Reserved | 4 | $\left(\dfrac{1}{2048}\right)^{1/4}$ | 8 | $\left(\dfrac{1}{128}\right)^{1/4}$ | 12 | $\left(\dfrac{1}{8}\right)^{1/4}$ |
| 1 | $\dfrac{1}{\sqrt{128}}$ | 5 | $\dfrac{1}{2\sqrt{8}}$ | 9 | $\dfrac{1}{\sqrt{8}}$ | 13 | $\dfrac{1}{\sqrt{2}}$ |
| 2 | $\left(\dfrac{1}{8192}\right)^{1/4}$ | 6 | $\left(\dfrac{1}{512}\right)^{1/4}$ | 10 | $\left(\dfrac{1}{32}\right)^{1/4}$ | 14 | $\left(\dfrac{1}{2}\right)^{1/4}$ |
| 3 | $\dfrac{1}{8}$ | 7 | $\dfrac{1}{4}$ | 11 | $\dfrac{1}{2}$ | 15 | 1 |

FIG. 1

Mapping of elements of $i_{2,4,l}$: $k_{l,i,f}^{(2)}$ to $p_{l,i,f}^{(2)}$

| $k_{l,i,f}^{(2)}$ | $p_{l,i,f}^{(2)}$ |
|:---:|:---:|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | 1 |

FIG. 2

# FIG. 3A

Rel.15/16 Type II Port Selection

# FIG. 3B

| | | | |
|---|---|---|---|
| Port 1 | $b_1$ | $b_1$ | ... |
| Port 2 | $b_2$ | $b_2$ | ... |
| Port 3 | $b_3$ | $b_3$ | ... |
| Port 4 | $b_4$ | $b_4$ | ... |
| Port 5 | $b_5$ | $b_5$ | ... |
| Port 6 | $b_6$ | $b_6$ | ... |
| Port 7 | $b_7$ | $b_7$ | ... |
| Port 8 | $b_8$ | $b_8$ | ... |

Frequency (delay)

# FIG. 4A

Rel.17 Type II Port Selection

The Same SD beam but different FD beam

# FIG. 4B

| | | | |
|---|---|---|---|
| Port 1 | $b_1 f_{1,0}$ | $b_1 f_{1,1}$ | ... |
| Port 2 | $b_2 f_{2,0}$ | $b_2 f_{2,1}$ | ... |
| Port 3 | $b_3 f_{3,0}$ | $b_3 f_{3,1}$ | ... |
| Port 4 | $b_4 f_{4,0}$ | $b_4 f_{4,1}$ | ... |
| Port 5 | $b_5 f_{5,0}$ | $b_5 f_{5,1}$ | ... |
| Port 6 | $b_6 f_{6,0}$ | $b_6 f_{6,1}$ | ... |
| Port 7 | $b_7 f_{7,0}$ | $b_7 f_{7,1}$ | ... |
| Port 8 | $b_8 f_{8,0}$ | $b_8 f_{8,1}$ | ... |

Frequency (delay)

EP 4 723 504 A1

Codebook parameter configurations for $L$, $\beta$ and $p_v$

| paramCombination-r16 | $L$ | $p_v$ | | $\beta$ |
| --- | --- | --- | --- | --- |
| | | $v \in \{1,2\}$ | $v \in \{3,4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |
| 7 | 6 | ¼ | - | ½ |
| 8 | 6 | ¼ | - | ¾ |

FIG. 5

## Codebook parameter configurations for $\alpha$, $M$ and $\beta$

| paramCombination-r17 | M | $\alpha$ | $\beta$ |
|---|---|---|---|
| 1 | 1 | ¾ | ½ |
| 2 | 1 | 1 | ½ |
| 3 | 1 | 1 | ¾ |
| 4 | 1 | 1 | 1 |
| 5 | 2 | ½ | ½ |
| 6 | 2 | ¾ | ½ |
| 7 | 2 | 1 | ½ |
| 8 | 2 | 1 | ¾ |

FIG. 6

| Bits $b_2^{(k,2(N_1 x_2 + x_1)+1)} b_2^{(k,2(N_1 x_2 + x_1))}$ | Maximum Amplitude Coefficient $p_{l,i}^{(1)}$ |
|---|---|
| 00 | 0 |
| 01 | $\sqrt{1/4}$ |
| 10 | $\sqrt{1/2}$ |
| 11 | 1 |

FIG. 7

| Bits $b_2^{(k,2(N_1 x_2 + x_1)+1)} b_2^{(k,2(N_1 x_2 + x_1))}$ | Maximum Average Coefficient Amplitude $\gamma_{i+pL}$ |
|---|---|
| 00 | 0 |
| 01 | $\sqrt{1/4}$ |
| 10 | $\sqrt{1/2}$ |
| 11 | 1 |

FIG. 8

Near-field

Far-field

L

Antenna array

Near-field boundary $\propto L^2/\lambda$

FIG. 9

FIG. 10A

Beamforming for far-field

Antenna array

Planar wavefront

FIG. 10B

Beamforming for near-field

Antenna array

Spherical wavefront

FIG. 11A

Rank-1 Tx in LoS channel for far-field

D

Single-layer

d

d

FIG. 11B

LoS-MIMO for near-field
exploit non-linear phase delays

D

D'

d

d

Multi-layer

FIG. 12A

Same beam for all panels

Panel 0

$b >> \lambda$

Panel 1

FIG. 12B

Spatial multiplexing via X-pol. in LoS

Panel 0

Panel 1

H-pol        Layer 1

V-pol        Layer 2

## FIG. 13A

Inter-site multiple panel/TRP scenario

## FIG. 13B

Intra-site multiple panel/TRP scenario

## FIG. 14A

Beamfocusing

## FIG. 14B

LoS-MIMO

## FIG. 15A

Type I multi-panel codebook

Panel 0

Panel 1

$V_{l,m}$

## FIG. 15B

Enhanced codebook

Panel 0

$b >> \lambda$

Panel 1

$V_{l\_0,m\_0}$

$V_{l\_1,m\_1}$

Type I multi-panel codebook

Layer 1

Layer 2

FIG. 16

Type I multi-panel codebook

FIG. 17

Enhanced codebook

FIG. 18

FIG. 19

## FIG. 20A

Type I multi-panel codebook

## FIG. 20B

Enhanced codebook

Alt. 1

SD beam set for panel 0, ... , panel $N_g-1$
(for single dimension, e.g., $l_q$)

0                                                                    $N_1O_1-1$

$N_1O_1$

FIG. 21

EP 4 723 504 A1

Alt. 2a

SD beam set for panel 0

$0$                                            $N_1 O_1 - 1$

SD beam set for panel 1, ... , panel $N_g - 1$

$I_0 - M_1/2 + 1$                    $I_0 - M_1/2$

$I_0$

$M_1/2$            $M_1/2$

FIG. 22

Alt. 2b

SD beam set for panel 0

SD beam set for panel 1, ... , panel $N_g$-1

FIG. 23

EP 4 723 504 A1

2-layer, $N_g$=2
Alt. 1

FIG. 24

2-layer, $N_g$=2
Alt. 2

H-pol

V-pol

FIG. 25

FIG. 26

FIG. 27

FIG. 28

USER TERMINAL (20)

TRANSMITTING/RECEIVING SECTION (220)

BASEBAND SECTION (221)
- TRANSMISSION PROCESSING SECTION (2211)
- RECEPTION PROCESSING SECTION (2212)

CONTROL SECTION (210)

RF SECTION (222)

MEASUREMENT SECTION (223)

230

EP 4 723 504 A1

BASE STATION 10, USER TERMINAL 20

1001

PROCESSOR

1007

1004

COMMUNICATION APPARATUS

1002

MEMORY

1005

INPUT APPARATUS

1003

STORAGE

1006

OUTPUT APPARATUS

FIG. 29

FIG. 30

## INTERNATIONAL SEARCH REPORT

| International application No. |
| --- |
| **PCT/JP2023/020089** |

**A. CLASSIFICATION OF SUBJECT MATTER**

*H04B 7/0456*(2017.01)i; *H04B 7/0417*(2017.01)i
FI: H04B7/0456 300; H04B7/0417

According to International Patent Classification (IPC) or to both national classification and IPC

**B. FIELDS SEARCHED**

Minimum documentation searched (classification system followed by classification symbols)

H04B7/0456; H04B7/0417

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2022/269390 A1 (LENOVO (SINGAPORE) PTE. LTD.) 29 December 2022 (2022-12-29) <br> paragraphs [0036]-[0042], [0054]-[0058], [0075]-[0088], [0094]-[0158], fig. 1-3, 10-11 | 1-6 |
| Y | LG ELECTRONICS. Summary of issues on CSI feedback Type I. 3GPP TSG RAN WG1 #88b R1-1706565. 2017 <br> section 3 | 1-6 |
| Y | INTEL CORPORATION. On CSI feedback Type I. 3GPP TSG RAN WG1 #89 R1-1707360. 2017 <br> section 2 | 1-6 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **14 December 2023** | **26 December 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

### INTERNATIONAL SEARCH REPORT
Information on patent family members

International application No.

**PCT/JP2023/020089**

| Patent document cited in search report | Publication date (day/month/year) | Patent family member(s) | Publication date (day/month/year) |
|---|---|---|---|
| WO 2022/269390 A1 | 29 December 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010